(19) Europäisches Patentamt
European Patent Office
Office européen des brevets

(11) **EP 4 432 199 A1**

(12) **EUROPEAN PATENT APPLICATION**

(43) Date of publication:
**18.09.2024  Bulletin 2024/38**

(21) Application number: **23305333.9**

(22) Date of filing: **13.03.2023**

(51) International Patent Classification (IPC):
**G06Q 20/38** *(2012.01)*    **G06Q 20/40** *(2012.01)*

(52) Cooperative Patent Classification (CPC):
**G06Q 20/3829; G06Q 20/38215; G06Q 20/4018**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mastercard International Incorporated
Purchase NY 10577 (US)**

(72) Inventors:
• **COLLINGE, Mehdi
  7141 Hainaut (BE)**
• **VENOT, Claire
  78120 Rambouillet (FR)**

(74) Representative: **Keltie LLP
No. 1 London Bridge
London SE1 9BA (GB)**

(54) **CRYPTOGRAPHIC SERVICE DELIVERY IN A DECENTRALIZED TRANSACTION SYSTEM**

(57)     A method of providing a cryptographic service at a computing node is described. The cryptographic service is provided for a requesting party external to the computing node in relation to a transaction. The cryptographic service operates on transaction data in a cryptographic service format. At the computing node, the following steps take place. A service request is received from a requesting party: this service request comprises a request to perform a cryptographic service in relation to the transaction; and the request comprises transaction data in a transaction format. The computing node detects from the transaction data in the transaction format that it comprises transaction data in a cryptographic service format, and it extracts the transaction data in the cryptographic service from one or more data fields of the transaction format. This is possible as the one or more data fields have been repurposed to contain the transaction data in the cryptographic service format. The computing node then processes the transaction data in the cryptographic service format to perform the cryptographic service. An associated method of performing a transaction is also described, along with suitable computing apparatus for performing these methods.

FIG. 4

## Description

Field of Disclosure

The present disclosure relates to cryptographic service delivery in a decentralized transaction system.

Background to Disclosure

There are multiple technical challenges with requiring a centralized system to provide services to an exceptionally large number of clients, particularly when these are widely geographically distributed. It is logical to consider distributing the system so that the relevant services can be provided by a set of geographically distributed servers, rather than one central server or data centre.

Such decentralisation may use any suitable architecture using geographically distributed servers - or data centres - to deliver services to clients (this may be public cloud, private cloud, or simply a private distributed system). The architecture may be considered as comprising a number of nodes - when using such a distributed architecture, a node may be an aggregation of a number of computers and may cover more than one data centre with "real-time" connectivity and data sharing within a given node.

Decentralisation may itself be problematic, particularly if different service instances need to relate to each other in some way - for example, if a service needs to establish details of how a past service has been performed. This may require, for example other clients (or other system nodes) need to refer back to the service providing node or otherwise understand how, the service providing node performed that service. This is particularly challenging when the service is a cryptographic service. In a transaction system - where a credential is typically generated by a cryptographic process and then validated in the authorisation of a transaction using a matching cryptographic process, validation of a credential will typically require such information concerning the generation of the credential.

Credential management of this kind may be even more challenging when these services may be called in a number of different contexts - for example, for different transaction types involving different transaction flows that may involve different messaging and different forms of involvement from parties involved with the transaction. A further difficulty here is that in order to use long-established transaction protocols used by an installed base of computer systems, there may be very severe constraints on the amount of data that can be used, or the way in which particular data is provided. It would be desirable to address such concerns efficiently without making fundamental changes that would prevent use of the system by an installed base of computer devices and systems.

Summary of Disclosure

In a first aspect, the disclosure provides a method of providing a cryptographic service at a computing node for a requesting party external to the computing node in relation to a transaction, wherein the cryptographic service operates on transaction data in a cryptographic service format, the method comprising at the computing node: receiving a service request from a requesting party, wherein the service request comprises a request to perform a cryptographic service in relation to the transaction, and wherein the request comprises transaction data in a transaction format; detecting from the transaction data in the transaction format that it comprises transaction data in a cryptographic service format, and extracting the transaction data in the cryptographic service from one or more data fields of the transaction format, wherein the one or more data fields have been repurposed to contain the transaction data in the cryptographic service format; and processing the transaction data in the cryptographic service format to perform the cryptographic service.

Using this approach, transaction data in a format that can be used by the cryptographic service is embedded in a pre-existing transaction format - this can be done by repurposing of appropriate repurposing of fields in the pre-existing transaction format such that the transaction format message meets the formal requirements of the transaction format, and consequently is not interpreted as being an error in the conventional transaction infrastructure. This allows the cryptographic service to be provided effectively without the need for any compromise in working with a pre-existing transaction infrastructure.

In embodiments, the one or more of the repurposed data fields of the transaction format relate to transaction parameters carried in equivalent data fields in the cryptographic service format. These one or more repurposed data fields of the transaction format may relate to transaction parameters carried in equivalent data fields in the cryptographic service format relating to one or more of a counter, a random value or an application cryptogram.

A first repurposed data field of the transaction format may identify the transaction data in the transaction format as having one or more data fields repurposed to contain the transaction data in the cryptographic service format. The cryptographic data format may be one of a plurality of cryptographic data formats, and the first repurposed data field may then identify which of the plurality of cryptographic data formats is used.

This transaction format may be an EMV data format in which transaction data is carried in the DE55 data element. In one embodiment, the transaction may be a cardless ATM transaction.

A second repurposed data field of the transaction format may identify the computing node.

In a second aspect, the disclosure provides computing apparatus comprising a processor and a memory and adapted to operate as a computing node to perform the method of the first aspect.

In a third aspect, the disclosure provides a method of performing a transaction at computing apparatus of a transacting party, comprising: creating transaction data for which a cryptographic service is required, wherein the cryptographic service is to be provided by a computing node; compiling the transaction data in a cryptographic service format; preparing a message in a transaction data format used for performing the transaction, wherein one or more data fields of the message in the transaction data format are repurposed to contain the transaction data in the cryptographic service format; and identifying in the transaction data format that the one or more data fields have been repurposed to contain the transaction data in the cryptographic service format.

In embodiments, one or more of the repurposed data fields of the transaction format may relate to transaction parameters carried in equivalent data fields in the cryptographic service format. Such repurposed data fields of the transaction format relating to transaction parameters carried in equivalent data fields in the cryptographic service format may relate to one or more of a counter, a random value or an application cryptogram.

In embodiments, a first repurposed data field of the transaction format may identify the transaction data in the transaction format as having one or more data fields repurposed to contain the transaction data in the cryptographic service format. The cryptographic data format may be one of a plurality of cryptographic data formats, and the first repurposed data field may then identify which of the plurality of cryptographic data formats is used.

In embodiments, the transaction format may be an EMV data format in which transaction data is carried in the DE55 data element. One such transaction may be a cardless ATM transaction.

A second repurposed data field of the transaction format may identify a computing node designated to provide the cryptographic service.

In a fourth aspect, the disclosure provides computing apparatus comprising a processor and a memory and adapted to perform the method of the third aspect.

Description of Specific Embodiments

Specific embodiments of the disclosure are now described, by way of example, with reference to the accompanying drawings, of which:

Figure 1 shows multiple clients interacting with a central server;
Figure 2 shows multiple clients interacting with a distributed computing architecture providing the same services as the central server of Figure 1;
Figure 3 shows operation of a distributed system such as that shown in Figure 2 where distributed nodes create and validate proofs, and where one set of clients has specific service requirements;
Figure 4 shows operation of the distributed system of Figure 3 where one set of clients has specific service requirements and operating according to an embodiment of the disclosure;
Figure 5 shows schematically a distributed transaction architecture using a four-party model;
Figure 6 illustrates elements of a complex distributed system adapted to implement the transaction architecture of Figure 5;
Figure 7 shows schematically an exemplary system for enabling digital transactions in the transaction architecture of Figures 5 and 6;
Figure 8 illustrates a transaction flow for a cardless ATM transaction;
Figure 9 illustrates schematically an arrangement for a distributed system for digital enablement of transactions;
Figure 10 illustrates a computing node of the arrangement of Figure 9 in more detail;
Figure 11 illustrates elements within the computing node of Figure 10;
Figure 12 indicates transaction flow in relation to operations performed by the node of Figure 10;
Figure 13 indicates use of tokenization in an embodiment of the arrangement of Figures 10 to 12;
Figure 14 indicates an approach to key management used in the arrangement of Figures 9 to 13;
Figure 15 illustrates an exemplary approach to transaction identification;
Figure 16 illustrates an exemplary set of cryptographic mechanisms for use for digitized transactions in the arrangement of Figures 9 to 15;
Figure 17 illustrates a global model of key management with individual modes managed as shown in Figure 14;
Figure 18 illustrates a global model of monitoring associated with the key management model of Figures 14 and 17;
Figure 19 illustrates a UCAF format (UCAF Format 6) particularly suitable for use with an exemplary node of the type shown in Figure 10;
Figure 20 shows different routes that a digital transaction may take, and provides context for embodiments of the disclosure;

Figure 21 is similar to Figure 20 but shows provisional of an additional client process - in the specific case indicated, cardless ATM - which has a specific messaging requirement;

Figure 22 illustrates a conventional DE55 messaging format;

Figure 23 indicates an approach followed according to embodiments of the disclosure for handling DE55 messaging in the Figure 21 case;

Figure 24 indicates a cardless withdrawal ecosystem, showing in particular ecosystem elements relating to cardless ATM; and

Figure 25 indicates use of a NODES infrastructure in a cardless ATM transaction.

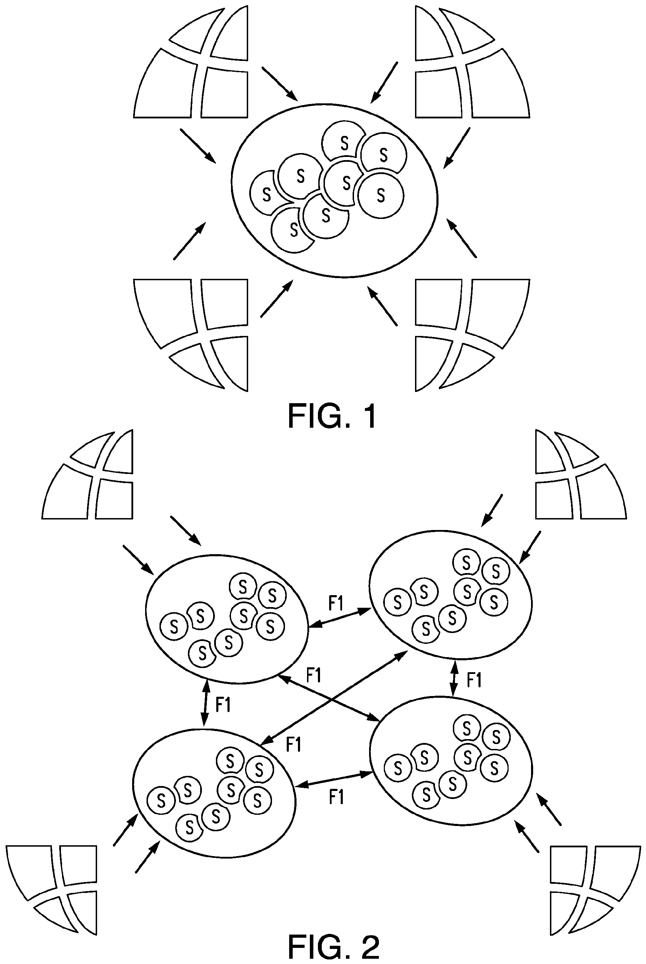

In general terms, the context of the disclosure is illustrated in Figures 1 to 3. Figure 1 shows a central system performing functions in response to requests from a very large number of geographically distributed entities. This places intense demand on the central system in relation to processing capability, storage and messaging, and will typically lead to significant load on the system overall because of bottlenecks and messaging requirements. This is in addition to the problem of network latency resulting from travel time when a request is coming from a geographically distant requester communicating with a centralized system.

Figure 2 shows an alternative arrangement in which the role of the central system is replicated so that the same functions are performed by a distributed set of nodes, each with the capability to perform some or all of the functions provided by the central system. Individual nodes should see a significantly lower demand than the central system, and as entities should be able to interact with a more local node than the central system, there is potential to reduce network latency. However, as discussed above in general terms, and below with specific relevance to a transaction processing system, there are significant technical challenges in achieving this benefit - in particular, there would for straightforward replication be a need to distribute all the same information to all the nodes replicating the centralized system, generally making the overall position worse rather than better. Here the nodes are shown communicating between each other with a particular messaging format F1 which contains all the information necessary to perform the relevant services.

There are particular difficulties where it is necessary for a second user of the system to be satisfied that an action taken by a first user of the system was legitimate. In the Figure 1 case, this is relatively straightforward - as the service is performed centrally and the central system has all information, then if users trust the central system this is typically not problematic. In the Figure 2 case, the first user may have been interacting with one node and the second user may be interacting with another node, in which case the same level of confidence cannot be achieved unless all necessary information is held in common between all the nodes, suitably synchronized, which would defeat the point of disaggregation when replicating a centralized system. If the product of the first service performed by the first user is valuable information - such as the proof of a payment made by the first user to be used by a second user in completing a transaction - then risks of system failure or compromise by, for example, use of a proof at multiple nodes by multiple second users to complete a relevant transaction, need to be addressed. This situation is made still more complex when different types of client action may require use of this service, particularly where one type of client action has very specific messaging requirements.

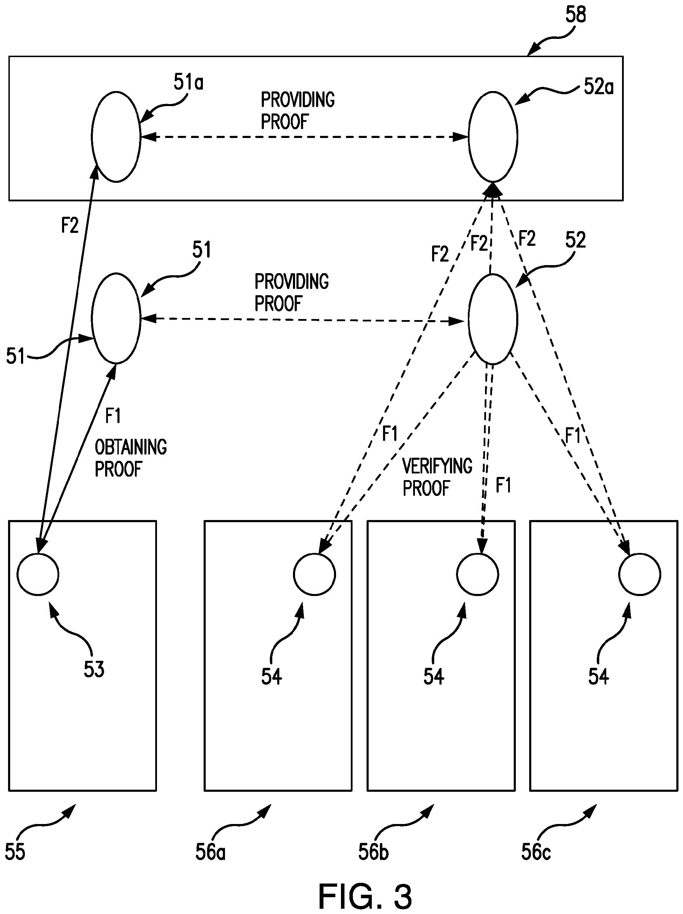

Generally, this situation is shown in Figure 3. A first user 51 requests execution of a first service 53 - in this case, the creation of a credential such as a proof of an event such as a payment from a particular account - and a second user 52 requests validation of the proof of this event, for example to determine that a payment is validly made, from a second service 54. The first user 51 has invoked the first service 53 at a first node 55. The second user will typically not have a choice of where to invoke the second service 54 - this may be a matter of geography or other administrative factors - and in particular may not be able to invoke the second service 54 at the first node 55 (though this may be a possibility). In practice, the second service 54 will then be invoked at a further node 56a, 56b, 56c that has sufficient information to achieve the validation process. Typically, this will involve access to a common set of cryptographic keys together with the minimal set of information required to regenerate the proof or otherwise determine that the proof is correct - as discussed below, in embodiments a limited set of keys may be used. Situations in which such a proof, or an object claiming to be such a proof, is presented to one or more second services at one or more nodes need to be addressed for such a system to function reliably and securely. Complexity is created by the existence of a client process 58 that requires use of a particular format F2 - this will therefore be used by both first user 51a and second user 52a in interacting with the service.

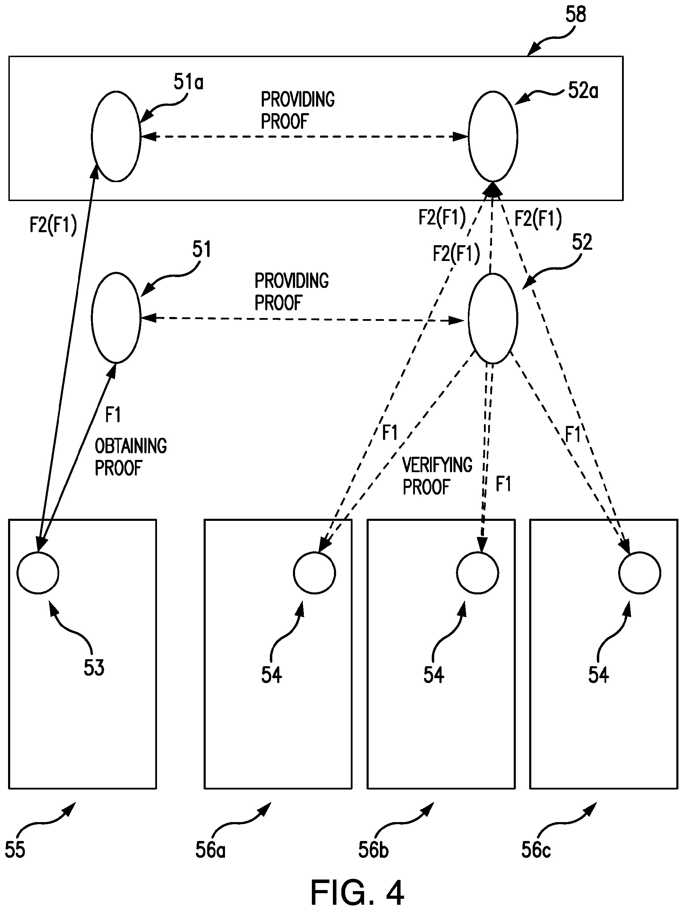

An approach to resolving this issue is shown in Figure 4. This is that while communication by the first user 51a and 52a meets the formal requirements of F2, the F2 messaging is here used to contain an F1 message. This F1 message is extracted by the first service 53 and the second service 54, so the decentralized system can use its preferred messaging approach F1. It should be noted that some of the same information may be provided for in both the F2 format and the F1 format. This approach is extremely flexible, and may be used for multiple types of service (so the F2 format could potentially contain an F3 format message, an F4 format message, and so on), and also decouples the F1 format from the F2 format so that the F2 format can evolve over time independently of any evolution of the F1 format.

This issue is particularly relevant to transaction processing systems, and in particular to systems for handling digital transactions. The number of digital transactions is increasing extremely rapidly, and it is necessary for them to execute reliably and rapidly. Support of these transactions can use transaction processing systems developed for device-based payments using payment cards and use the protocols of such payment systems, but in practice such transactions have a different character from device-based transactions. This is discussed below, first by reference to the general elements of a transaction processing system, and then by a more detailed discussion of the infrastructure used to support digital transactions.

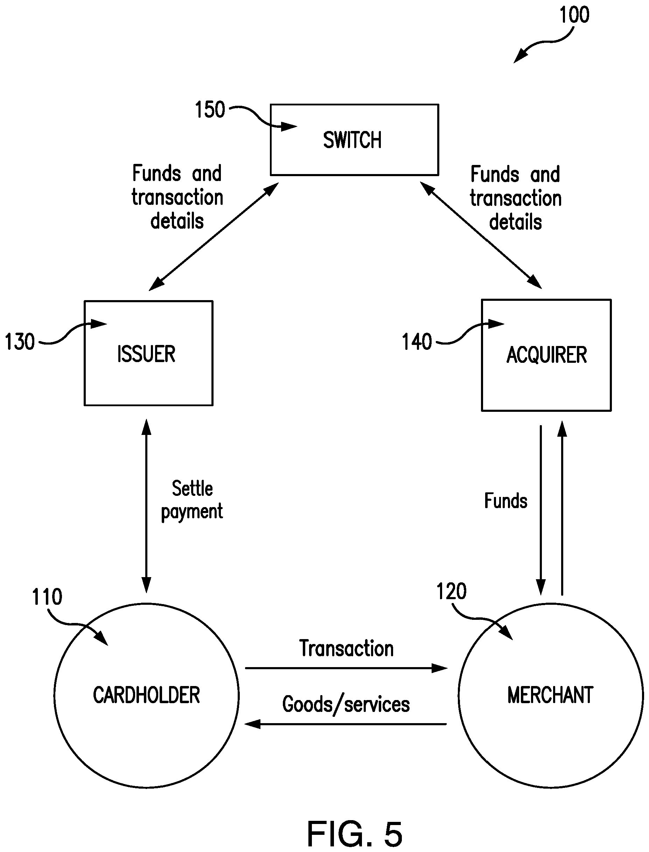

Figure 5 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of an online transaction). Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

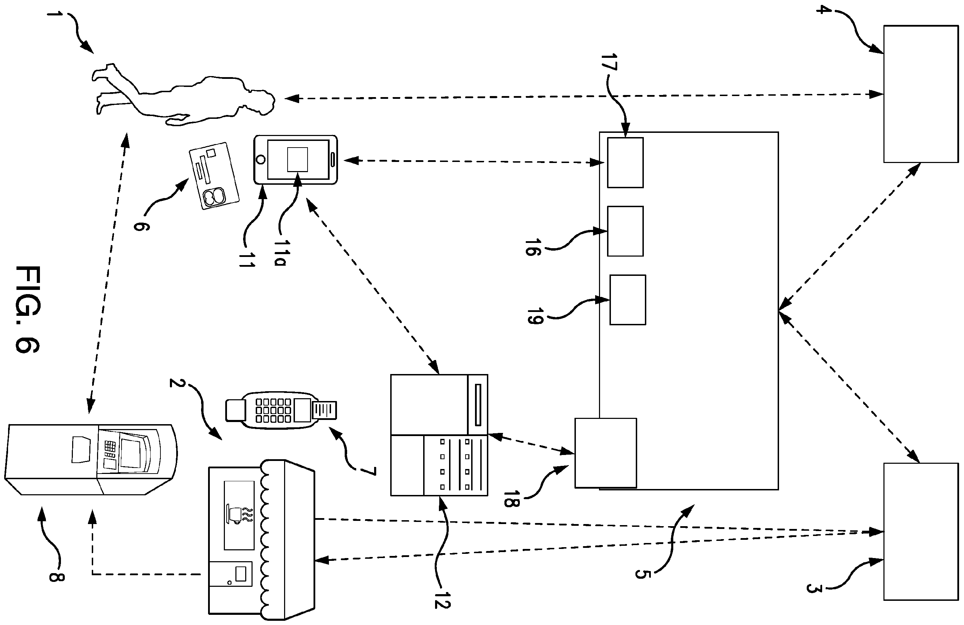

Figure 6 shows an architecture according to an embodiment of the disclosure appropriate for interaction between a cardholder and a merchant. This Figure shows a general-purpose architecture for reference but shows in particular elements of an architecture used when a cardholder carries out an online transaction with a merchant server.

For a conventional transaction, a cardholder will use their payment card 6 - or a mobile computing device such as smartphone 11 adapted for use as a payment device - to transact with a POS terminal 7 of a merchant 2 or to interact with an ATM 8. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below - these may be accessed through a banking app 11a on the smartphone 11. The smart phone 11 can use this to transact with a merchant POS terminal 7 using NFC (or another contactless technology), or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device.

A further use case of interest here, which will be discussed further below, is that of cardless ATM. In such a transaction, the cardholder will communicate with their issuer 4, typically using the banking app 11a on their smartphone 11, to enable a contactless cash withdrawal from the ATM 8. This supports an interaction between the cardholder (and smartphone 11) and the ATM 8 to enable provision of cash through the ATM 8 to the cardholder by mechanisms described in more detail below.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

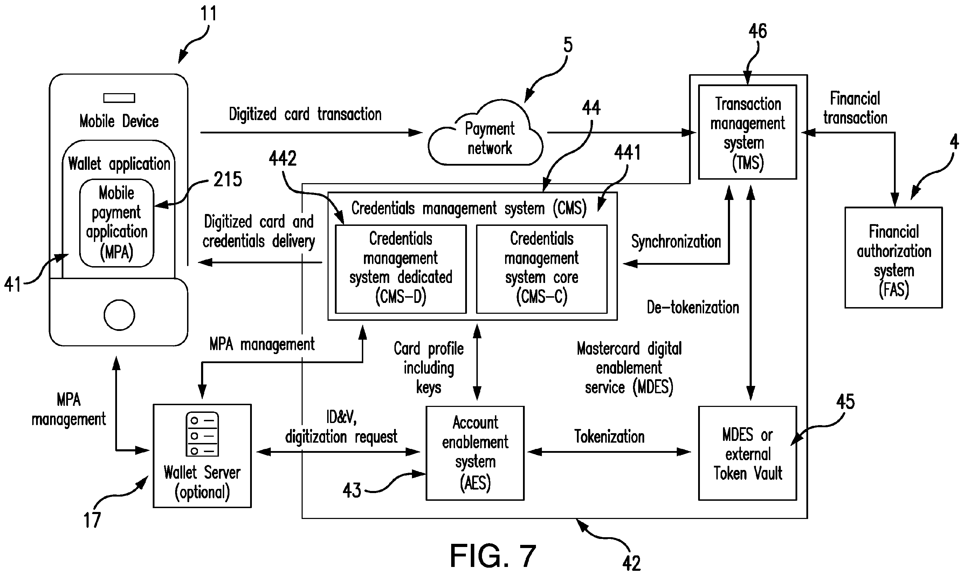

Figure 7 shows elements of a transaction infrastructure to support digitized payments from a mobile device in more detail. This Figure shows as a specific example the applicant's Mastercard Cloud-Based Payment (MCBP) architecture - this is exemplary rather than specific to the disclosure, and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitization and user establishment. It will interact with the mobile payment application (here through the wallet server 17) for card digitization requests, and it will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

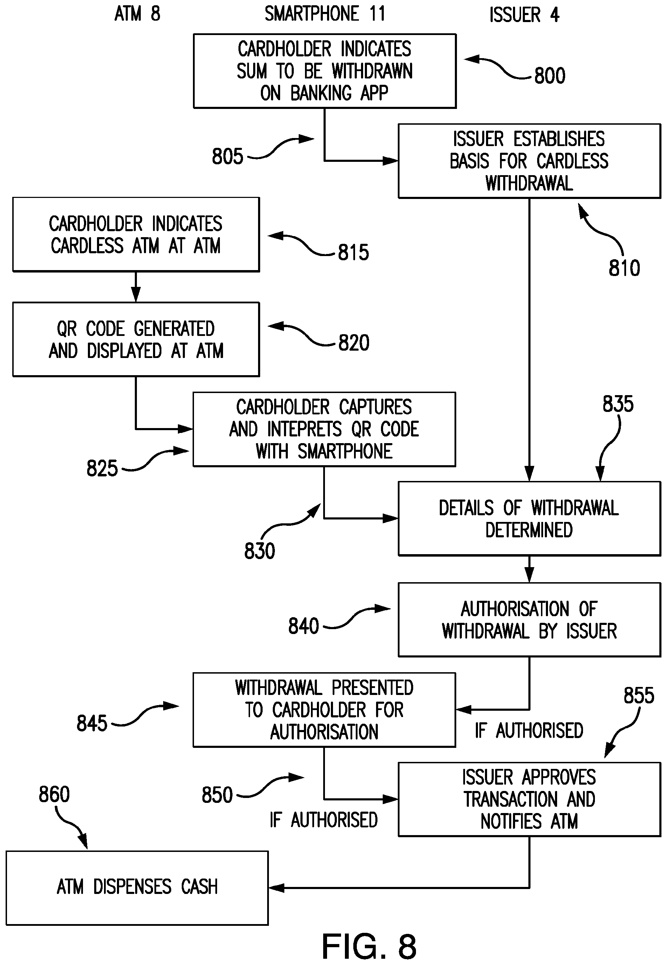

As indicated above, cardless ATM is a particular functionality of interest. A transaction flow for cardless ATM is indicated in Figure 8. First of all, a cardholder initiates 800 the withdrawal by using their banking app 11a and indicating a sum to be withdrawn. This is communicated 805 to the issuer 4 for the cardholder through the banking app 11a, and the issuer 4 establishes 810 that a contactless withdrawal is to follow. At the ATM 8, the cardholder presses 815 a cardless ATM button (or other suitable interface) - this results in the generation of a QR code that is displayed 820 on the ATM screen, the QR code identifying the ATM and indicating that it is ready to perform cardless ATM. This is captured by the cardholder using the camera 11b of their smartphone 11, and the QR This Icode is interpreted 825 by the banking app 11a and relevant information provided 830 to the issuer 4. The issuer 4 determines 835 the details of the proposed cardless withdrawal, and if it the withdrawal is authorised 840 by the issuer (for example, after determining that the cardholder has funds available and that the ATM is legitimate), the transaction details and any associated fees are presented to the cardholder to accept on the screen of their smartphone 11. The user then accepts 845 (or rejects) the transaction using the screen of the smartphone 11, and if the transaction is accepted the banking app 11a notifies 850 the issuer 4, who subsequently approves 855 the transaction to the ATM 8, and funds are dispensed 860 to the cardholder. The mechanics of such a transaction - and the consequences for decentralization - are discussed further below.

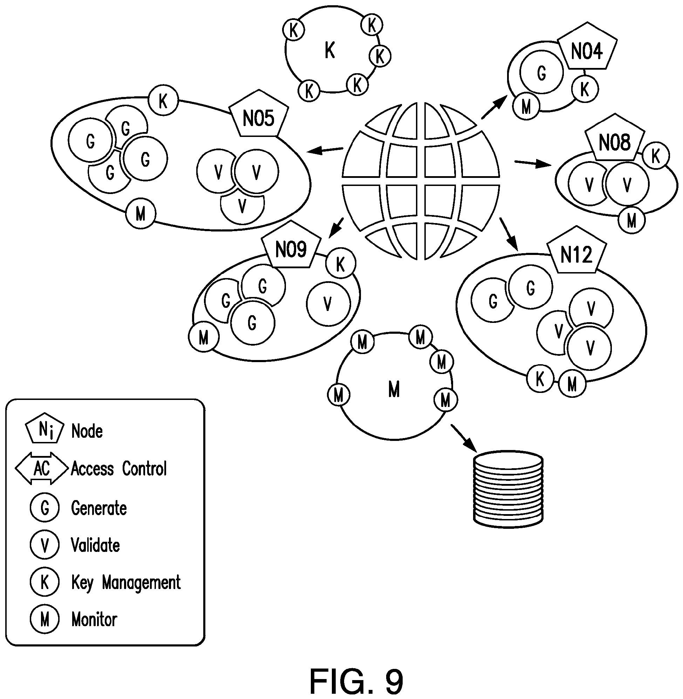

An approach to enabling aspects of a system for the performance of a digitized transaction as shown in Figure 7 - and in particular the management of credentials - to be decentralised is described in the applicant's earlier European Patent Application No. 19178579.9, the contents of which are incorporated by reference to the extent permitted by applicable law. This is done by replacing a central node with a decentralised set of nodes each capable of credential management, as is shown in Figures 9 to 11. This architecture is referred to below as NODES (Network of Distributed E-Commerce Security).

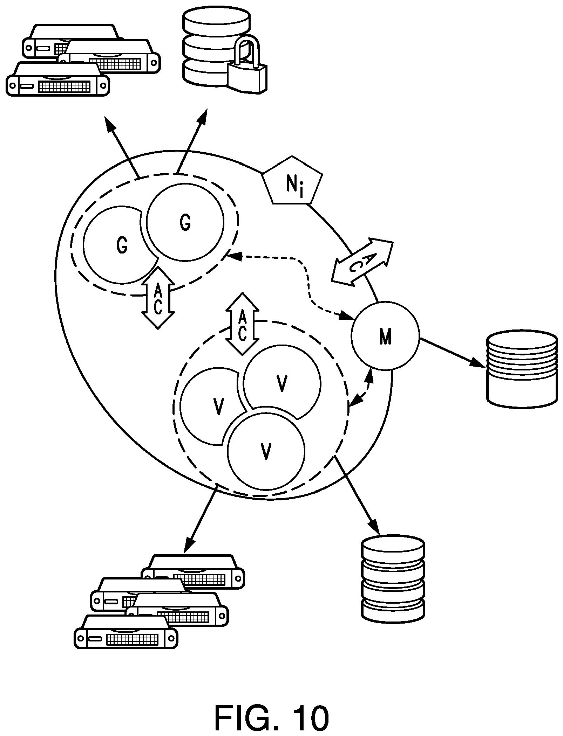

Figure 9 shows a decentralised system of computing nodes Nx, each capable of both generating G and validating V credentials. These credentials can be valid across the whole system (unless restricted to some nodes as result of on-soil regulation or the like), and in this case are associated with transactions for a set of users (clients) whose transactions are routed to that node, typically through geographic proximity. Nodes provide credential generation G and credential validation V as services to clients, and they need to be able to generate the credentials securely and validate them securely while they are valid at least. In the architecture shown, credentials are not stored - they are generated on request and validated on the fly. As Figures 9 and 10 show, in addition to credential generation and validation, key management K and monitoring M can be considered as services both locally at a node and across the system, and access control AC will typically be required to allow access to a service. These aspects will all be described in more detail below.

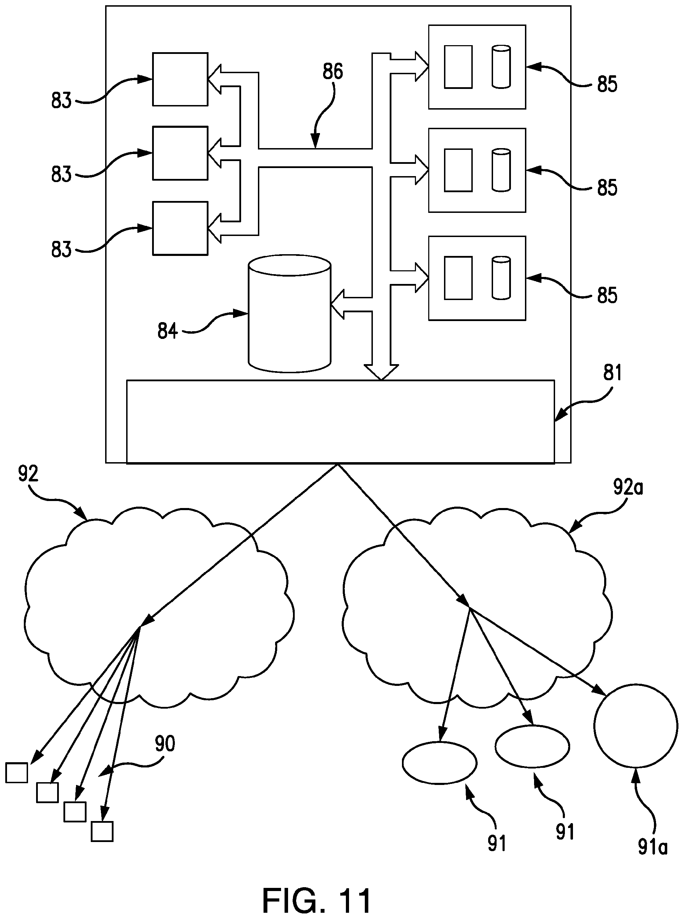

Elements of a suitable computing node are shown in Figure 11. The node 80 comprises at least one networking connection 81 to allow communication to clients 90 and other nodes 91 as well as (in this example) a central node 91a. Communication is shown here as being through separate networks to each set of other parties - through a first network cloud 92 for connection to clients, and a second network cloud 92a for connection to other nodes within the distributed system. This reflects that these networks may be physically different, or that they may have different security requirements and protocols.

The node 80 contains a plurality of conventional servers 83 (which will contain their own processors and memories - not shown - along with other components as would normally be found in a server) and a memory 84 containing a central database. Also comprised within the node 80 are a plurality of hardware security modules 85 (HSMs), adapted to hold cryptographic material in the form of keys needed to perform cryptographic functions and to perform cryptographic functions securely. Here elements within the node 80 are shown communicating by means of a bus 86. While the node 80 in this case is represented as a single data centre, this is not required - the "bus" may be, for example, comprise a dedicated network connection between a group of related data centres that allows them to provide a real-time response such that they will appear to other entities communicating with the node to be part of an integrated whole.

Existing procedures for credential management in payment systems are centralised - any request to create or validate credentials results in a query to a centralised system. For a payment system implementing EMV standards, credentials are generated using keys derived according to a hierarchical process. Issuer Master Keys (IMK) are associated with a specific range of tokens, and keys for use for credentials are derived hierarchically (Card Master Keys - CMK - from IMK, and then Session Keys - SK - from CMK). This approach is used for devices, such as physical cards, but is also used for digital transactions. The number of digital transactions is increasing extremely rapidly, as opposed to device-based interactions where the growth is more consistent with resources.

In the digital ecosystem, while there is very rapidly increasing demand, there is also generally a more secure environment, as the interaction is typically between merchant systems (or payment service providers) and the transaction system over secure pathways between well-identified participants. There are thus interactions that may require multiple cryptographic operations for security in a device context that can be streamlined when delivering services in a server context when exposing API to access the services while keeping all the assets secure in a constrained environment including key management and cryptographic operations.

While it may appear desirable to scale a transaction system for performing digital EMV transactions by using a set of distributed servers to generate and validate credentials, it is found that this approach does not scale. The overall level of key generation would not be changed, but the amount of messaging within the system would be very greatly increased, as an extremely large number of tokens would need to be managed and replicated. Processing would be demanding and also extremely expensive, as existing EMV key generation approaches require customised rather than off-the-shelf Hardware Security Modules (HSMs), and data storage and particularly network latency would become impossible to manage problems.

This distributed approach is supported by replacing the binding of a token to a specific hierarchically derived key, allowing instead the first available key from a stack of keys to be allocated to a tokenized transaction. This approach, using flexible and dynamic key management, allows for a scalable solution. Monitoring can be carried out in such a way as to ensure that the distributed architecture is secure without requiring the transmission or replication of large quantities of sensitive information. This approach can also be carried out in a standard HSM using fully FIPS compliant processes - for example, DES and 3DES need not be used. This approach is described in more detail below.

At present, the device security model is also used by the present applicant for fully digital transactions. This security model involves Issuer Master Keys (IMKs) being stored in the transaction system HSMs and used to derive Card Master Keys (CMKs) from the relevant IMK and a card PAN (Primary Account Number). These CMKs are then stored in a device (typically a Secure Element or substitute technology). When using software-based solutions to generate transaction credentials using a mobile device, a Session Key (SK) is generated using the relevant CMK and an ATC (Application Transaction Counter) for the card/device - this is currently generated by the Credentials Management System (CMS) as shown in Figure 7. At present, all tokens, even for fully digital transactions, are bound to this IMK/CMK/SK derivation. This also applies for transaction credentials generated by server through API exposed by the transaction system for remote payment transactions.

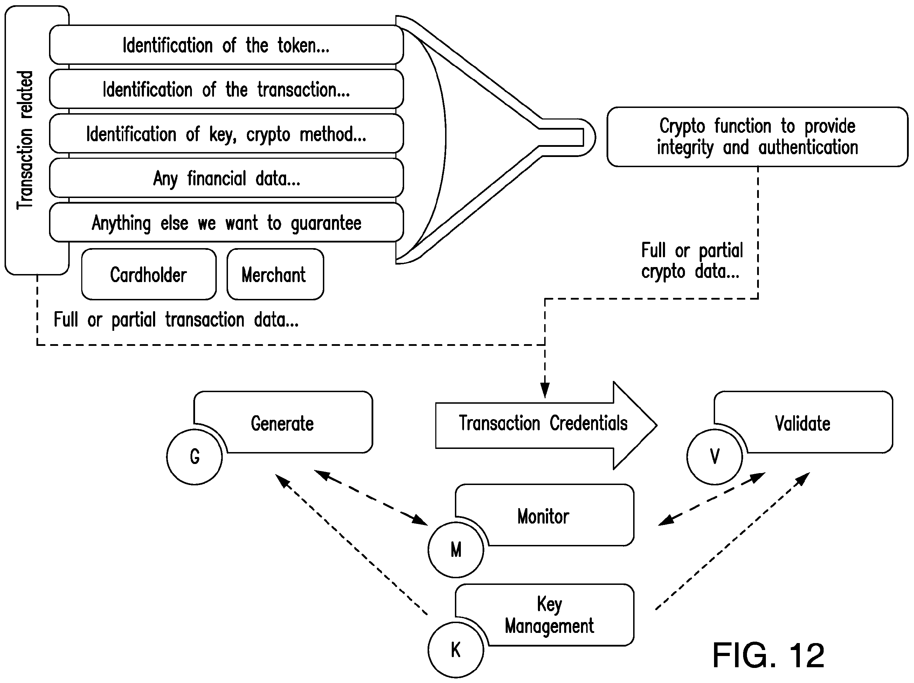

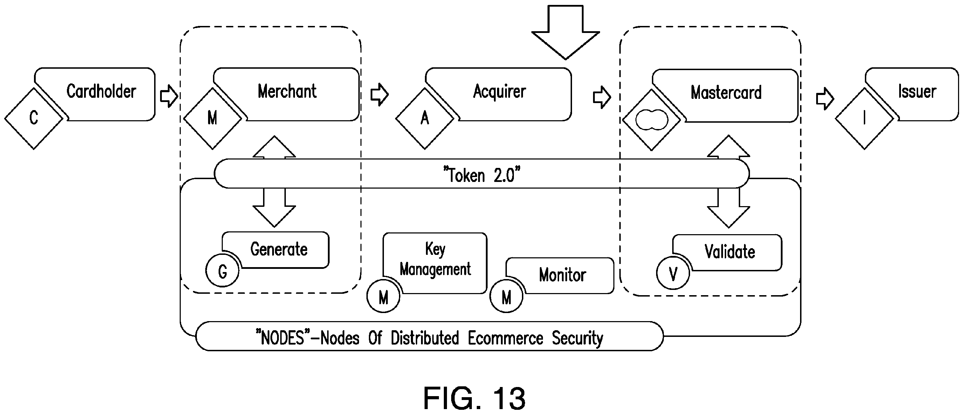

This approach requires a very heavy management load for keys, which is not appropriate for fully digital transactions, as is discussed below with reference to Figures 12 and 13. Generation of SKs, and hence Application Cryptograms (AC - a standard mechanism in EMV transactions) requires multiple cryptographic operations, not all of which can be carried out by a conventional off the shelf HSM, so bespoke HSMs are required. Massive distribution of keys across the system is required so that performance of a transaction can be supported wherever it occurs, and ATC management is complex. It would be desirable to use standard HSMs, avoid massive key replication while having keys directly available for use, and to be able to provide a solution that limits the number of HSMs overall (as these typically support only a few thousand keys).

Much of this security is to provide assurance by appropriate prevention mechanisms even if there is the possibility of compromise at a system endpoint (for example, at the cardholder device). Aside from this, security has a limited role, as shown in Figure 12. The main purpose of the cryptographic function is to provide a guarantee - this covers both integrity of the data and authentication. The transaction related data protected by a cryptographic data includes identification of a transaction and the associated token, along with an indication of any cryptographic processes used and any relevant financial data (along with any other aspect of the transaction that needs to be guaranteed). This is represented by a transaction credential - this needs to be generated G and subsequently validated V, with these processes being monitored M to ensure overall system integrity and supported by a key management system K of some kind. The present disclosure relates to an approach to monitoring which is effective to address the consequences of erroneous or malicious action by appropriate detection, messaging and reaction - as will be described, this largely takes place separately from the actual performance of a transaction.

In the case of a fully digital transaction, these processes take place in a constrained environment where endpoint security is not an issue in the same way as with devices. As can be seen from Figure 13, in this domain the token does not reach either of the endpoints of the conventional transaction management system - the cardholder or the issuer. Instead, it operates across a merchant system or a payment service provider (PSP) and transaction scheme provider.

This approach allows for decentralisation of the credential system from a complex central server into a number of nodes providing services. These nodes will typically be geographically distributed but may extend over a number of data centres (for example, by use of a cloud infrastructure to achieve data sharing within a node). These nodes provide services - in relation to credentials, a generation service G and a validation service V - with defined rules for access control to the services. The merchant or PSP communicates with the generation service G to obtain credentials, which are then used in a standard authorisation process carried out over the payment network of the payment system, with the validating service V being called upon where necessary to validate the credential. These services have access to the computing infrastructure (HSMs, databases) of a node. Monitoring M and key management K services are also provided - these may be centrally organised or comprise a mix of central and local functionality.

In the above discussion, it is assumed that nodes have both a generation service G and a validation service V - this need not be the case. In the arrangement shown in Figure 7, nodes are shown which provide only generation or only validation services. Both of these arrangements may well occur, and an environment in which there are significantly more nodes providing validation services V than generation services G is relatively likely.

Access control to services can be provided in an essentially conventional manner. A general set of controls can be defined for a node, with the possibility of local modification - for example, to meet local regulatory or other specific security requirements. This approach makes it easy to implement localised policies, for example, by constraining all traffic for a particular country to a particular set of nodes, or by taking other region- or market-specific actions. Access control can be performed at more than one level (for example, for individual services, but also for a node), and there may be specific rules or checks for specific service types. Access control is potentially very granular and may provide specific solutions in a versatile way - for example, it could be used to allow a given merchant to perform a maximum number of transaction credential generation operations during a defined time for a given token.

##

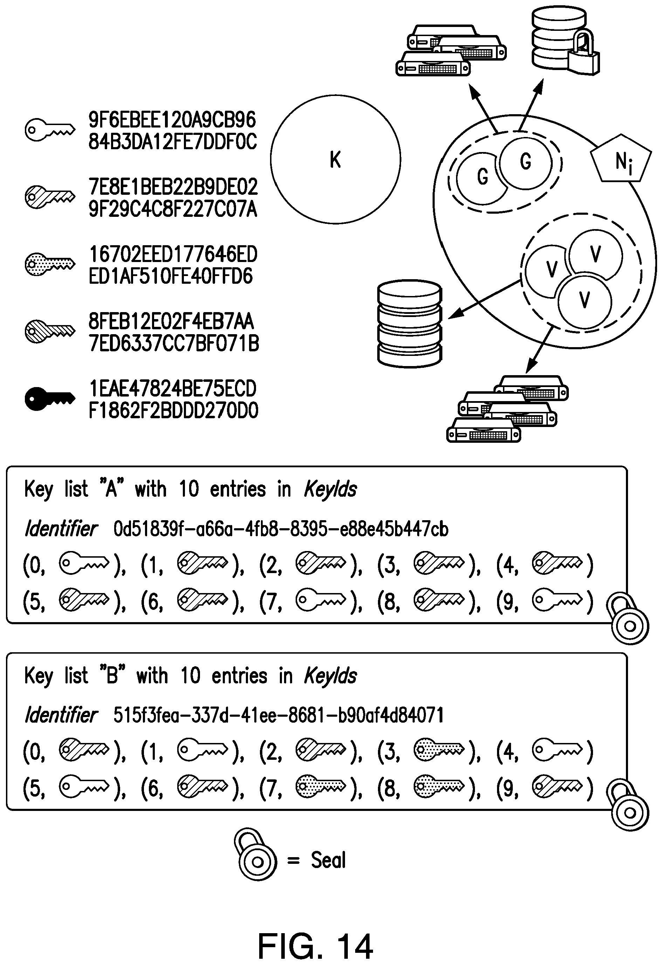

The key management mechanism shown in Figure 14 illustrates how a limited number of keys can be allocated to a node while providing a deterministic process in order to pick a key to generate credentials. The same process can be used by a validation entity to determine the key that was used by the generator so that it can validate any cryptographic material that is part of the credentials submitted for validation.

For each node, the generation G and validation V services have access to a pool of HSMs. The HSMs contain keys that are each uniquely identified by a set of key identifiers **(KeyId). KeyId** may be a label, a value, an explicitly unique value such as a UUID, or anything else with appropriate properties. These **KeyId** values are stored in uniquely identified (Identifier) key lists - these key lists provide a list of relationships between an identifier (**Id**) and a stored key **(KeyId).** The identifiers (**Id**) are what will be determined by the deterministic process in order to establish what key is to be used, as will be described further below.

The integrity of each key list is guaranteed using a seal (Seal) - if the key lists are provisioned from a central location, this may be applied by a trusted party associated with that central location. Several other distribution models can be supported using for example a trusted party being a local functionality instead of a central location. A node will typically have a number of key lists available, but with only one active for generating credentials (G) at a given time - it will however generally be necessary for the validation service (V) to be able to access any key list that may be associated with a credential that is still valid. Key rotation in this approach is extremely straightforward - it may simply involve replacement of the active key list with another key list. It is however very straightforward to tell which **KeyId** is needed to validate a credential - it will be determined fully by the node identifier and the reference of the key list. That information is part of the credential and is used as input to the deterministic process to pick a key from a list of keys.

Figure 14 illustrates an exemplary arrangement for Node Ni, which has two generation services G able to generate credentials associated with transactions. At any given point in time, these services G will be required to use a given key list - say Key List A in the first instance. This uses the yellow and blue keys, so these keys must be loaded in the HSMs used by the generation services G. After the expiry of a period of time, the key rotation process may for example mandate the use of Key List B - this uses yellow and blue keys, but also the green key, so the green key must be loaded in the relevant HSMs if not already present. The specific key to be used is selected from the key list by a deterministic process- this will typically give a different result after key rotation, but this is not inevitably the case (for example, **Id**=3 or **Id**=6 would give the blue key before or after rotation). While the generation services G do not need Key List A after key rotation, the validation services V still do - they require access to any key list that relates to a potentially valid credential. The validation services V must be able to establish exactly which key was used to generate a credential by the generation services G in order to validate a credential.

The transaction related data to be protected cryptographically includes identification of the token associated with the transaction, but also identification of the transaction itself. For this, some kind of transaction identifier is required. At each node, the credential generation and validation services have access to a local database which can be used to manage such data. To ensure that transactions are managed effectively across the system, any generation of transaction credentials for a given token should be associated with a unique transaction identifier for each transaction. This may be a UUID or any appropriate identifier structure (such as a concatenation of an n bit node identifier, an e bit epoch time, and a c bit local counter).

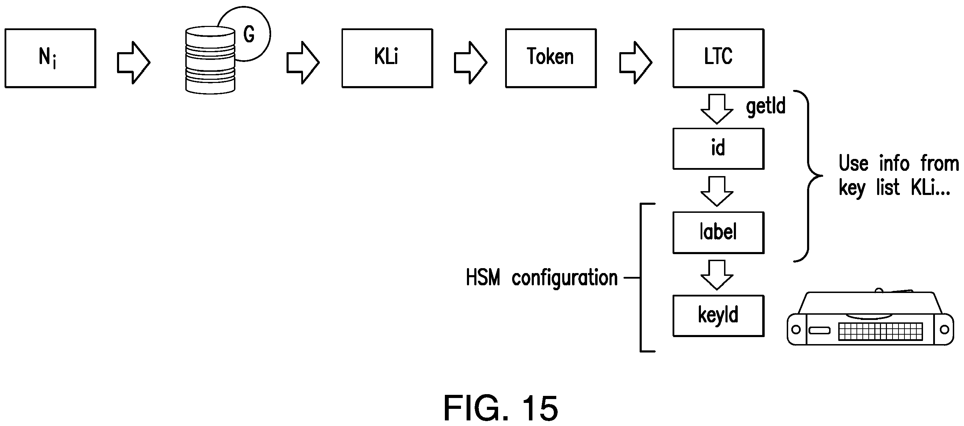

The size of data to be carried in transaction credentials could however be reduced to a few digits by use of a local transaction counter. This could simply be stored in the local database of a node and the local (rather than a global) value incremented when a local generation service G generates new transaction credentials for a token, a process shown in general terms in Figure 15.

An exemplary process for identifying a key to use for a transaction will now be described with reference to Figure 14. As indicated, at any given time a generation service G has access to a set of keys in local HSMs and uses keys in accordance with its currently active key list. This key list is itself uniquely identified (by *Identifier*) and contains a list of entries which correspond to relationships between an identifier (**Id**) and a stored key, represented by **KeyId.** In the case of Key List A, there are ten entries, and each **Id** is a single integer.

There will be a deterministic process associated with a key list to determine which key will be associated with a given transaction. It need not be the same deterministic process for every key list, but it needs to be used consistently for that key list so that both generation and validation services will achieve the same result. To provide this association, the deterministic process should operate on information identifying the transaction, such as some kind of transaction identifier - in this case, the local transaction counter (LTC) is a particularly effective choice as this is conveniently available and easy to process.

There are many choices available for a function, but the simplest choice is a MOD operation - for example here, **Id** = LTC MOD 10 would be appropriate to provide a deterministic result which could point to any of the available values of **Id.** Any validation service V with access to the transaction counter value in transaction data (or any counter derived from that value) can then determine the logical key identifier that was used by the generation service G that generated the credential and access the correct stored key without any trial and error mechanism. Associating the deterministic process function (referred to below as keyList.GetIdFunction, or **GetId)** to the attributes of a key list in this way allows a scalable solution that can accept any number of logical key identifiers for a given key list.

The HSM cryptographic function should be appropriate to ensure data integrity and authentication through credential generation and validation. The cryptographic function operates on the chosen transaction data, using the key, and provides an output which does not expose the key. Various alternative cryptographic functions could be used - HMAC is a particularly effective choice with several options regarding the hashing function, but CMAC, CBC MAC are among possible alternatives not even talking about solutions using asymmetric cryptography. The cryptographic function used should be specified in the key list (as *keyList.CryptoFunction*) and is also driven by the capabilities of the HSMs used for generation and validation. On-soil regulations, cryptographic material export or other security considerations may lead to the choice of specific cryptographic functions.

Within the transaction data, there should be information representative of the application cryptogram generated during the transaction process. This may be a reduced form of the cryptogram - for example, in legacy EMV transactions this may be provided as the CVC2 field. This is significant as a validation service V must be able to access all the data used by a generation service G to generate a cryptogram - this will include the following:

dynamic information carried as part of the transaction flow;
shared information from one of the following:

replicated processes (such as management of the key lists);
system parameters for particular use cases.

Different approaches can be used for difference transaction information formats - legacy transaction, UCAF and DPD field transactions. Legacy transaction use cases provide a solution when the Merchant and/or the PSP are only able to manage PAN, Expiry Date and CVC2 as part of the transaction flow, and do not have access to more recent developments. The UCAF use case aims to leverage the Universal Cardholder Authentication Field to carry more data as part of the transaction flow. The DPD use case covers the recently introduced Digital Payment Data, a container able to carry all the data needed as part of the transaction flow. As is noted below, the additional capabilities of formats such as UCAF can support embodiments of the disclosure in providing additional capabilities.

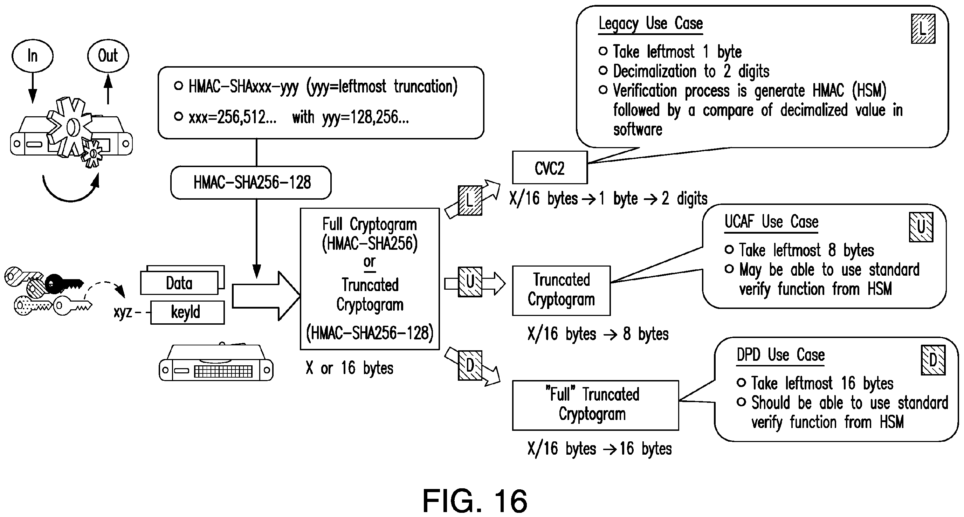

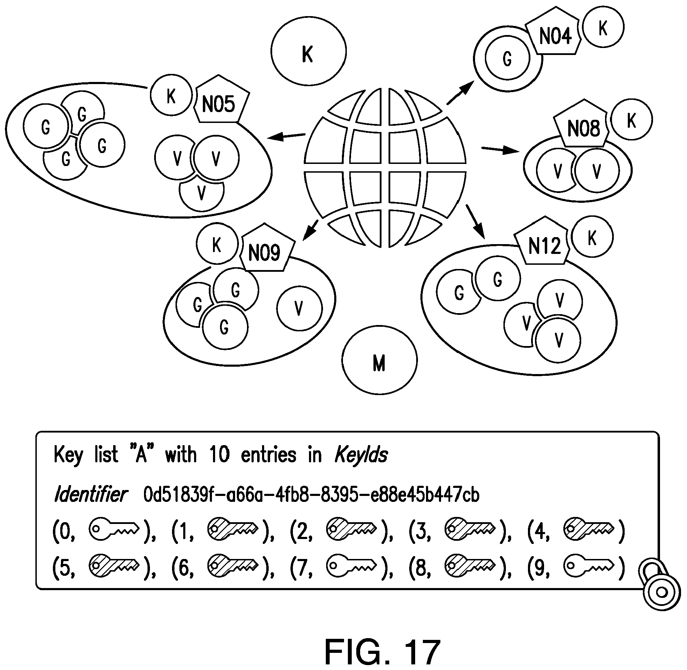

A full set of cryptographic mechanisms is shown in Figure 16. Key management is discussed with reference to Figure 17. There are two aspects to key management in this model: management of the keys themselves, including their generation and delivery to the HSMs associated with the nodes, and management of the key lists, including their generation, distribution, activation and deactivation. The key lists are sensitive assets while keys are considered as secret assets - the key lists define the keys to be used for generation and validation of cryptograms. Keys require end to end security with secure transport of the keys using wrapping/unwrapping techniques when loading the keys in HSMs. Their use should not be compromised by the key lists in case an attacker would like to change the content of a key list in order to alter the key selection process. The integrity of key lists is guaranteed by the seals - a seal is provided for a key list by the generating party or an associated trusted party, will involve a suitable cryptographic process (such as HMAC with an appropriate dedicated key or using for example a digital signature generated using asymmetric algorithms such as RSA, ECC, SM2...), and has the effect that any relevant part of the system can have confidence that the key list was generated by an appropriate party and has not been modified. In addition, the key list seals can be used in the generation and validation of cryptograms to secure the credentials.

Different control models are possible. There may be centralised control, with a central service generating keys and key lists, and distributing these to the different nodes. There however also may be localised control if dedicated processes are required at a particular node. This may in particular apply if there are specific requirements for a particular country - for example, on-soil regulations or restrictions on export of cryptographic material. This may also apply if there is a proprietary mechanism needed for HSM management - for example, with a particular cloud service provider. This need not be node-limited - it could apply to regional control with a central service within a region (this may be particularly appropriate where there is a specific security model for a particular country to meet local legal requirements). There may also be a hybrid or composite model, in which some key and key list provisioning is central, whereas some is local - there may also be a distributed model in which distributed peers together assume the role of a central service.

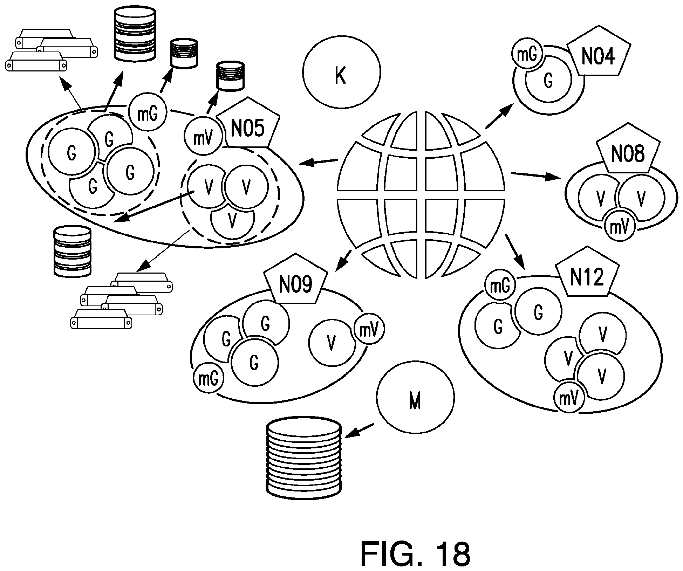

Monitoring is shown in general terms in Figure 18. Here, monitoring is complementary to security actions taken directly in a service to prevent fraud or misuse (such as the basic purpose of the service - generation of a credential using a cryptogram with subsequent validation). Such monitoring aims to detect security anomalies associated with a transaction - it can then trigger appropriate reaction mechanisms to contain any security risk and identify any attacker. In principle, this may have both local and central aspects. It is found that a hybrid approach is particularly effective in order both to provide effective detection of any issue and to produce reaction effective to counter risks associated with a fully distributed architecture.

There are three types of issue to be addressed by monitoring in such a system: integrity of the distributed system; generation of transaction credentials; and validation of transaction credentials. As transaction credentials may be generated or validated anywhere, it is important to have effective monitoring across the whole distributed system.

As described in, for example, the applicant's earlier WO 2022/250716 A1, recent versions of electronic transaction protocols can be used to carry more information than earlier protocols. Messaging generally follows ISO 8583 protocols (ISO 8583 is the ISO standard for financial transaction card originating messaging, used for authorisation messages by most transaction system providers), in which a number of data elements are defined. UCAF information is adapted for storage in ISO 8583 Data Element 104 (DE104) Sub Element 001 (SE001 - in total, DE104SE001), a field reserved for transaction description. A UCAF format typically consists of 21 bytes of hexadecimal encoded in base 64, with the format version being coded in the leftmost 4 bits for Digital Secure Remote Payment (DSRP) via MDES.

Where the Universal Cardholder Authentication Field (UCAF) is available, a number of additional digits are usable. UCAF is a format type developed for Digital Secure Remote Payments (DSRP), a technology of the applicant adapted to bring EMV approaches - including the use of an application cryptogram - into effective use for online and other digital transactions through tokenisation. UCAF is used to carry the cryptographic data in the authorisation request. A UCAF data format will carry a predefined set of data objects in specific fields - between different UCAF data formats, the set of data objects may differ, as may the space allocated to different data objects.

UCAF Format 0 was developed initially, and is used by particular technologies of the applicant (for example, Mastercard Cloud-Based Payment, TEE-Based Payment and some varieties of Mobile PayPass). This format contains necessary cryptographic information (such as the application cryptogram, application transaction code and the unpredictable number) but no merchant binding. UCAF Format 0+ (used by later versions of Mastercard Cloud-Based Payment) expands this to inclusion of a card verification result, but still provides no merchant binding. UCAF Format 1 (used by MChip Mobile) also does not have any merchant binding, but does include a pin try counter result. Merchant binding is provided in UCAF Format 3, which comprises a merchant ID hash and also an approximate amount (this is used for newer versions of transaction protocols that require merchant binding). UCAF Format 3+ also includes a card verification result.

The UCAF is base 64 encoded when carried in the payment network - it is carried as a 28 character alphanumeric character string. It therefore needs to be base 64 decoded before processing.

One architecture that uses a very full set of capabilities is the DXD (Digital By Default) architecture for digital transactions for specific country environments. A particular UCAF format, UCAF Format 6, has been developed for this purpose with a very full set of capabilities - more cryptographic material can be used, a larger number of nodes can be used without node identification becoming a problematic issue because of limited available space in transaction data as defined in electronic transaction protocol requirements, and it may also be possible to rotate key lists more frequently than 24 hours, as there is the space to use more than one bit for key list identification for validation services. Additional features can be delivered leveraging the available space in transaction data, for example by supporting merchant locking techniques (when the transaction is effectively bound to a given merchant using some form of merchant identification), by including additional components in the cryptographic process such as by using some pseudo-random element or variable content between the generator and the validator, or by taking additional measures to provide full compliance with any regulatory requirements.

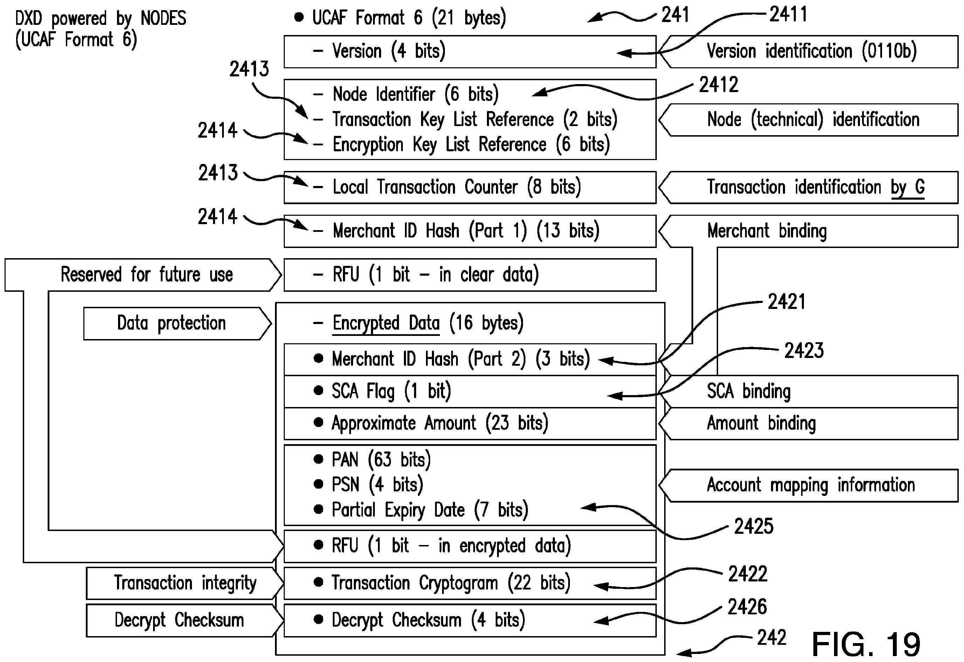

This UCAF Format 6 structure is shown in Figure 19. This is not an embodiment of the disclosure, but is shown here simply as a comparative of the type of data that can be carried in such a format, and how it can be carried. The UCAF Format 6 structure comprises an encrypted part 241 and an unencrypted part 242. The encrypted part 241 contains the credential (the cryptogram) and also certain transaction data, which allows certain elements to be held only in encrypted form. The unencrypted part 242 allows the transaction and its provenance to be identified.

In this example, the unencrypted part 241 contains 4 bytes of information that establishes the version, the node (and information related to the node), the transaction and certain merchant information. Version information 2411 is a 4-bit field allowing multiple versions of the format to be used. Information relating to the node includes a 6-bit node identifier 2412, and the key list references associated with the node - as indicated previously, these include a 2-bit transaction key list reference 2413 and a 6-bit encryption key list reference 2414. The transaction itself is identified by 1-byte of Local Transaction Counter (LTC) 2415. As described above, this information is sufficient to allow a node to perform validation (if permitted to do so) by regenerating the credential/cryptogram. Merchant binding to the token is provided by a Merchant ID Hash divided between a 13-bit unencrypted part 2416 and a 3-bit encrypted part 2421. Creation of the Merchant ID Hash is described in more detail below.

Use of encryption allows other transaction information to be held in encrypted form, but available in the future after decryption so that a transaction may be mapped to a PAN (Primary Account Number) without the need for maintaining a specific mapping database - other significant information such as PAN Sequence Number (PSN) can be held in this way. The encrypted data 242 comprises 16 bytes of data, the first three bits of which is the encrypted part 2421 of the Merchant ID Hash as identified above. The cryptogram 2422 forms another 22 bits of the encrypted data. One bit is used as an SCA Flag 2423 to indicate whether Strong Customer Authentication is used for the transaction. A further 23 bits are used for approximate transaction amount 2424 - these can be coded in the form

$$\text{Reconstructed Amount} = A * 2^B$$

where A is used for the leftmost 18 bits and B for the rightmost 5 bits. Another 74 bits relate to card information 2425. This includes the PAN (63 bits) and the PSN (4 bits, which is sufficient for one digit value) which can be provided in full. 7 bits are used to carry expiry date information - this therefore needs to be a partial expiry date, which is discussed below-the embodiment described below also supports delivery of the partial expiry date being optional at time of generation of the transaction credentials. A further element in the encrypted data in this case is a checksum 2426.

The Merchant ID may use the Remote Commerce Acceptor Identifier, which is a relatively new EMV field used to identify merchants (for example, by business website URL or reverse domain), if available. The Merchant ID Hash is provided in the following way:

- Merchant ID is provided as (by conversion or otherwise) a HEX value
- Buffer is created as follows

     ◦ Hash of Merchant ID (32 bytes)
     ◦ Approximate Amount (3 bytes left padded by Ob)
     ◦ Local Transaction Counter (coded on 2 bytes, left padded by Ob)

- Hash computed over buffer using appropriate crypto model
- Merchant ID Hash is first two bytes of hashed buffer

As noted above, in the embodiment provided here, the provision of an expiry date value is optional. If it is provided, then encoding and decoding activity will be carried out by the NODES system if it is valid - otherwise an error will be returned. If it is not provided, information must be carried that will prevent the system from returning an expiry date value in validation or decryption.

This information needs to be provided using the limited amount of space available - 7 bits - working from the Standard Expiry Date, which is coded over 4 digits (YYMM), though with practical constraints on the values for some fields (as there are only 12 months in a year and the year of expiry will not be far removed from the present year). This is exploited by first of all defining a "baseline" value for expiry date, which is simply provided as a parameter for the encryption key list. After this, one special value of 0 [0000000b] is determined for encoding of "no expiry date defined" (generate) - for this value, there should be no expiry date returned at the time of decoding (whether for validation or for any other decryption). All other values -1 [0000001b] to 127 [1111111b] - are simply used to indicate the number of months from the baseline value to the provided expiry date (on generation) to provide reliable decoding on validation or any other decryption. If a supplied expiry date is returned which is lower or equal to the baseline value, or exceeds 127 months after the baseline, this is invalid, and an error is returned. As noted above, the encrypted data also comprises a checksum. This is provided as in some circumstances it may be desirable to obtain assurance on decryption of the integrity of the data beyond that which is provided by validation of the cryptogram.

The UCAF Format 6 illustrated in Figure 19 indicates the types of information that can be carried if all relevant parties support such a format. However, the credential generation and validation infrastructure may in practice need to support service requests from a variety of parties using a number of different transaction flows and transaction types. In some cases, all parties will be able to support a structure of the type shown in Figure 18. Another UCAF Format type, UCAF Format 5 (not shown), has many common features with UCAF Format 5, but differs in some material respects. For UCAF Format 6, the DPAN (token) and token expiry date are used to identify the token. For UCAF Format 5, a TUR (Token Unique Reference) may be used instead of a DPAN to identify the token, again, together with a token expiry date (and token sequence number PSN) - in the UCAF Format 5 case, no DPAN information is received in the NODES call, but only the TUR information.

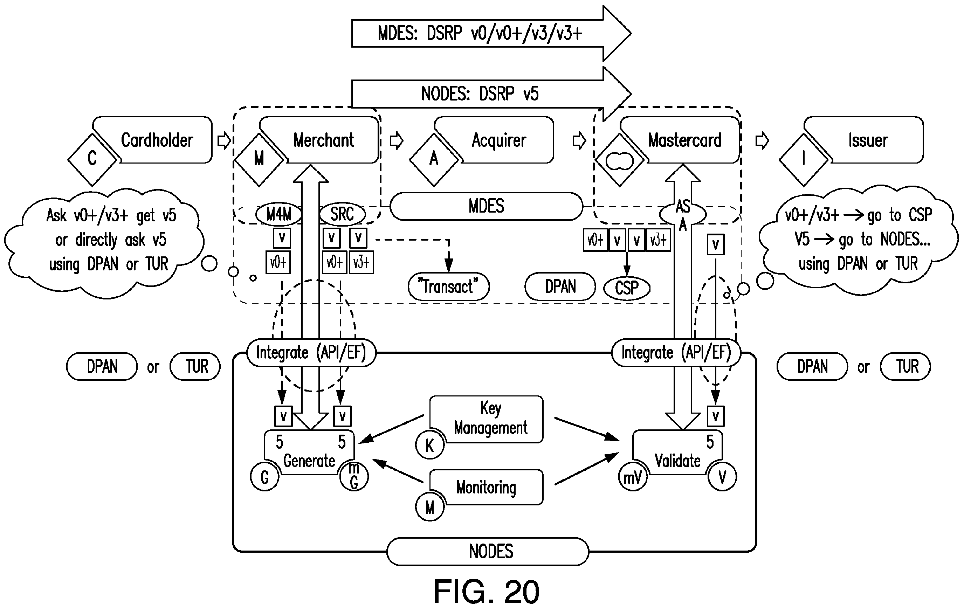

In other cases, parties may only be able to support a much more limited information exchange. Whereas the NODES architecture is generally designed to operate using later UCAF formats - here UCAF Format 5 and UCAF Format 6, as described above - earlier digital transaction solutions are more limited in their capabilities. A "legacy" access to the NODES architecture may use other elements of ISO 8583 messaging: here, the PAN (DE02), the Expiry Date (DE14) and the Cardholder Validation Code (CVC - DE48SE92). This range of possibilities is shown in Figure 20.

In most cases in which NODES is used, this approach to messaging can be used. However, there are some cases when this cannot apply, of which cardless ATM is an example. In the cardless ATM transaction flow, the payment mechanism follows a significantly different route to a conventional transaction in that the transaction is established between cardholder and issuer and then completed when the issuer is notified of the ATM details through the OR code, with confirmation provided to the ATM - this requires a server-based token approach, as described earlier. These are only designed to operate using the standard EMV mechanism for carrying contact or contactless transaction data, which is in the ICC data field of ISO 8583, DE55. DE55 has a specific structure, and messaging may pass through system elements that will check that DE55 is properly formatted.

A practical challenge is therefore to address contexts that require data to be present in the DE55 field for processing - such as cardless ATM - while also allowing use of a NODES architecture - which has specific data requirements, may require different information (and data formats) for different service requesting entities, and which typically uses other data fields (of different sizes) to convey these - for provision of necessary generation and validation of credentials. This context is illustrated generally in Figure 20, which shows different transaction routes. Most of these are for digital transactions supported by the Mastercard Digital Enablement Service - as discussed earlier in the specification, this is used for online transactions and relies on card tokenisation. The token is here referred to as a digital Primary Account Number (DPAN), and in some architectures may be identified by a Token Unique Reference (TUR) rather than a DPAN. This is adapted here for compatibility with pre-NODES digital architecture solutions, such as MDES for Merchants (M4M) and Secure Remote Commerce (SRC) also known as Mastercard Checkout Services (MACS), and for interaction with a variety of service requesting nodes that may have different capabilities (hence the need for UCAF Version 5, UCAF Version 6, and the legacy use case C).

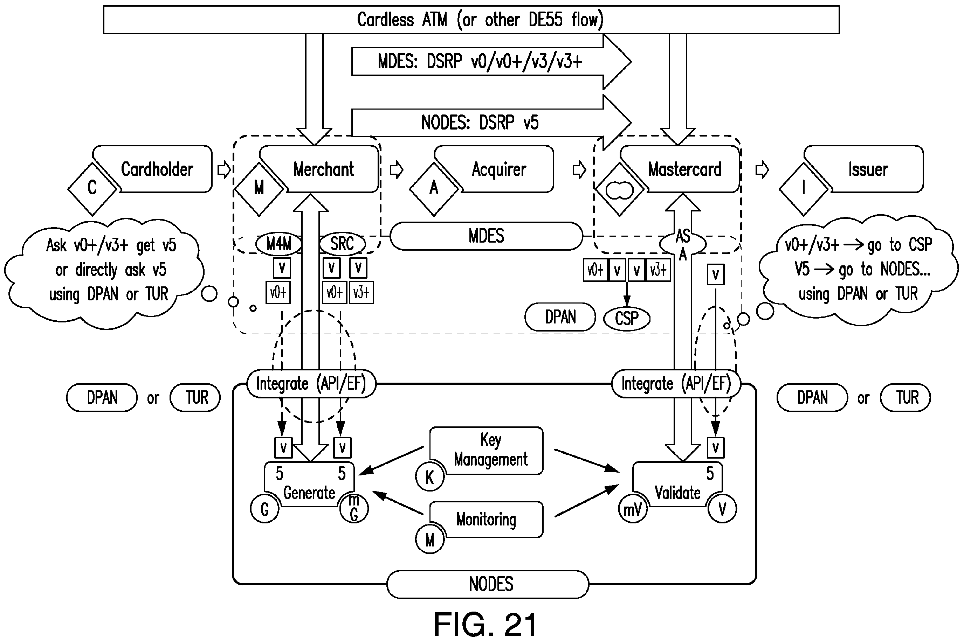

Figure 21 shows a modification to the arrangement of Figure 20 illustrating the situation addressed by embodiments of the disclosure. Services requiring a DE55-based solution are shown as yet a further pathway into the NODES architecture, reflecting that there is the same variety in service requesting nodes as for the variety of MDES transactions also supported.

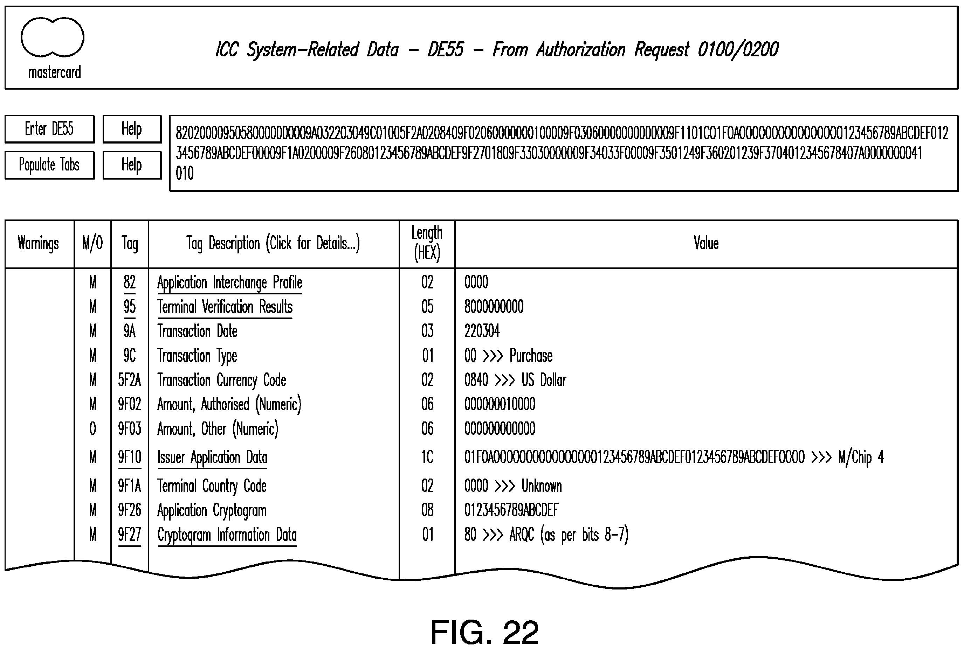

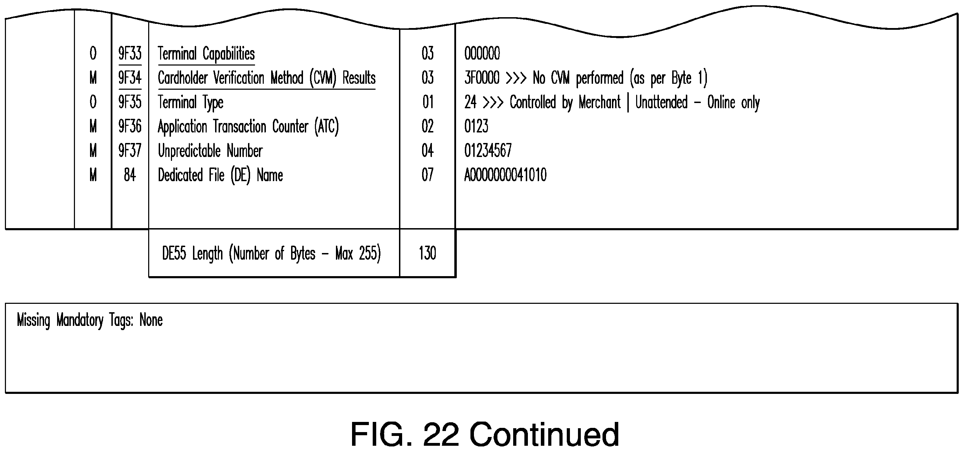

The present inventors have appreciated that a repurposing of the DE55 field can be achieved so that it is formally compliant with EMV requirements for the field - so the message will not be rejected as not EMV-compliant - but such that the data required by NODES (and specifically by one of the indicated NODES data formats) can be carried. As can be seen from Figure 22, which shows an EMV implementation of DE55, while some fields in DE55 are optional, others are mandatory. The implementation therefore needs to "contain" all mandatory fields to be compliant.

The approach taken involves for the UCAF Format 5 and the UCAF Format 6 cases completely repurposing key parts of the DE55 field - this is used as a carrier for the UCAF Format 5 and the UCAF Format 6 data, and the data fields of DE55 are themselves not meaningful, even where some of these data fields relate to data actually carried in the UCAF Format 5 or the UCAF Format 6 information. As there is more space available in DE55 than in DE104SE001 (32 bytes as opposed to 21 bytes), it is possible to reorganise the UCAF data to fit not only DE55 generally, but also with a data usage that respects the field arrangement required by EMV for DE55.

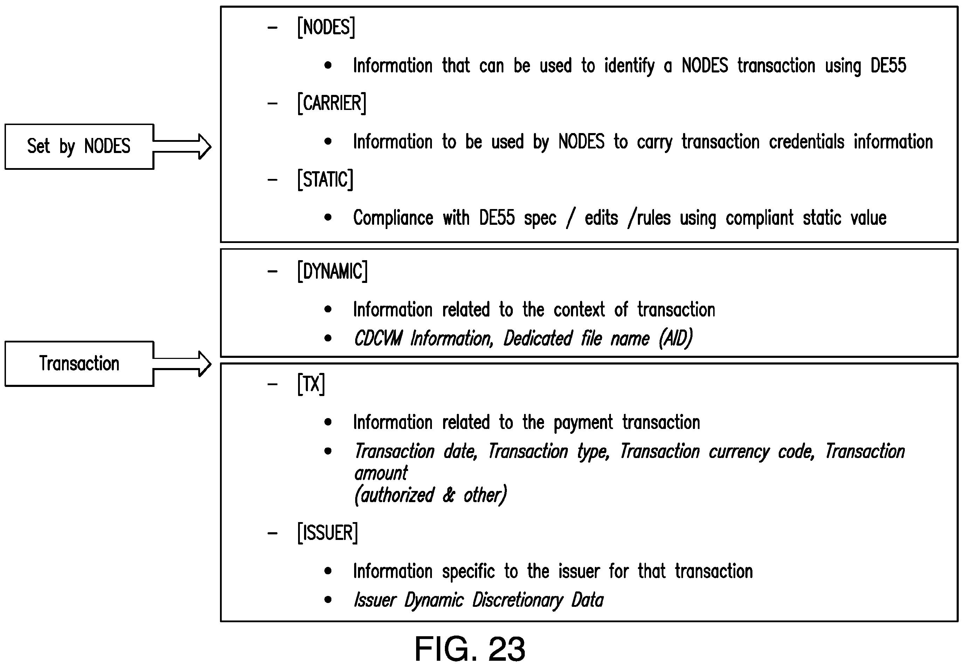

The information to be stored in DE55 can be split into NODES-related and transaction-related information, as shown in Figure 23. The NODES-related information 220 - or rather, the information set by NODES - can be divided into three groups: information 2201 used to identify a NODES transaction carried by DE55 (referenced as [NODES]); carrier information 2202 used by NODES to carry transaction credentials information ([CARRIER]); and static information 2203 used to achieve DE55 compliance ([STATIC]).

The transaction-related information 221 can be divided into two broad types: dynamic information 2211 related to the context of the transaction ([DYNAMIC]), such as CDCVM information, or a dedicated filename for an application (AID) used to carry it out; and information specific to the transaction 2212 ([TX]) such as transaction date, transaction type, transaction currency code and transaction amount or specific to the issuer 2213 ([ISSUER]) such as issuer dynamic discretionary data.

Some form of solution is needed for all of the "mandatory" DE55 fields in order to use DE55 for NODES data. The solution found is to provide default values for a number of the fields and to repurpose other fields entirely by using them collectively as a carrier for NODES data (here in the form of carrier information field 2202.

A practical implementation approach for all of these fields is described below, following the fields identified in Figure 23 and referencing back to the DE55 formatting of Figure 22.

For the NODES-related information 220, the identifying information 2201 is provided by two DE55 fields: Key-DerivationIndex (KDI) and CryptogramVersionNumber (CVN). In EMV DE55, these are bytes 1 and 2 of IAD Tag 9F10. KDI is a 1-byte field that is appropriately sized for use for a Node Identifier, so the correct node is associated with the service provision (and hence for routing). CVN is also a 1-byte field, and can here be used for identifying the format version that is carried: in the embodiment shown here, this may be UCAF Format 5, UCAF Format 6, or a custom format UCAF Format C - as 1-byte is available, many other formats can be created and made available for use here.

For the carrier information 2202, certain fields in DE55 are used that are either not required for NODES or which are carried already by whichever UCAF format is used. The following fields are repurposed:

- Application Transaction Counter - ATC (Tag 9F36 - 2 bytes)
- Application Cryptogram - AC (Tag 9F26 - 8 bytes)
- Unpredictable Number - UN (Tag 9F37 - 4 bytes)
- Counters (in IAD - 16 bytes) - CTR (Tag 9F10) - Bytes 11-26

This releases 30 bytes of data, which is sufficient to carry all UCAF format information. These fields do not have a constrained set of values (unlike, say, an expiry date field), and so any hexadecimal value can be used for any byte of the carrier. However, any entity processing this information must be aware of the repurposing - otherwise, for example, the ATC field could be interpreted as an actual ATC value, which it is not (though ATC information and AC information is carried within the carrier information as part of the UCAF format).

The only other NODES-set information is the static information 2203, which is constrained for DE55 compliance, and so essentially involves specific value choices for DE55 fields, in particular the following:

Application Interchange Profile - AIP (Tag 82 - 2 bytes)
Defaulted to 0000, meaning "No support of (on device) cardholder verification, contactless or RRP"
Terminal Verification Results - TVR (Tag 95 - 5 bytes)
Defaulted to 8000000000 - B1b8, meaning "Offline data authentication was not performed"
Card Verification Results - CVR (Tag 9F10 bytes 3-8 - 6 bytes)
Defaulted to A00000000000 - B1b8-b5, meaning "2nd Gen AC not requested [10], ARQC returned in 1st Gen AC [10]"
Cryptogram Information Data - CID (Tag 9F27 - 1 byte)
Defaulted to 80 (ARQC)
Terminal Capabilities - TC (Tag 9F33 - 3 bytes)
Defaulted to 000000
Cardholder Verification Method Results - CVMR (Tag 9F34 - 3 bytes)
Defaulted to 3F0000, meaning "No CVM performed"
Terminal Type - TT (Tag 9F35 - 1 byte)
Defaulted to 24, meaning "Unattended - Online Only - Merchant terminal"

The remaining fields - respectively dynamic and transaction information, rather than information set by NODES - are handled as indicated in Table 1 below.

Table 1 - Population of non-NODES related fields in DE55

| Information Type | Field | Tag | Size (byte) | Default and Meaning |
|---|---|---|---|---|
| Dynamic | CdcvmInfo | 9F10 (bytes 9-10) | 2 | 0000 - last byte meaning "CDCVM Info not supported" OR set using supplied CDCVM information |
| Dynamic | DedicatedFileName | 84 | 5-16 | Generally used to carry AID (Application Identifier), proprietary use. |
| Transaction | TransactionDate | 9A | 3 | Defaulted to 000000 if not provided |
| Transaction | TransactionType | 9C | 1 | Defaulted to 00 (Purchase) if not provided |
| Transaction | TransactionCurrencyCode | 5F2A | 2 | Defaulted to 0000 if not provided |
| Transaction | AmountAuthorized | 9F02 | 6 | Defaulted to 000000000000 if not provided |
| Transaction | AmountOther | 9F03 | 6 | Defaulted to 000000000000 if not provided |
| Issuer | !ssuerDynamic DiscretionaryData | 9F10 (bytes 27-28) | 2 | Defaulted to 0000 if not provided |

The solutions for the different UCAF formats are straightforward following this approach. For UCAF Format 5, DE55 is being used as a carrier for the UCAF Format 5 information, which can simply be carried in bytes 1-21 of the carrier information part. The DE55 message will be routed correctly to the NODES architecture by virtue of the KD! field (acting as a node identifier) and the CVN field (which identifies the message as not standard DE55, but instead a NODES message with a UCAF Format 5 message carried by a DE55 message). This still leaves bytes 22-30 of the carrier information field as reserved for future use, so this solution is compatible with a significant amount of future development. For UCAF Format 6, essentially the same considerations apply - the embedded message here now is in UCAF Format 6, and this should again be indicated by the CVN field.

With 30 bytes of carrier information available, many different options can be covered in a custom use case. Additional format can be defined externally to the carrier information itself by using other space that is available within DE55 - for example, additional fits that are available in the IAD field. As before KD1 will be used for node identifier and CVN for the use case (in this case, NODES DE55 format, custom) - these need to be consistent as they are used for routing all NODES DE55 format messages. The following types of information can be held in the carrier as needed:

Codebook information to determine what content is held;
NODES Technical information, such as

Transaction Key List Reference (3 bits)
Encryption Key List Reference (conditional) (6 bits)
Local Transaction Counter (14 bits)

Token Information

Flag (DPAN or TUR) (1 bit)
Token PSN (4 bits)

SCA Information (2 bits) (note that CDCVM Information is already carried in tag 9F10 - IAD [DYNAMIC])
Cryptographic Information

Decrypt Checksum (conditional) (8 bits)
Transaction Cryptogram (64 bits)

Transaction Information (transaction type is already carried using tag 9C)

Amount binding with flag (optional) (24 bits)
Merchant binding (optional) (16 bits)
Initiator (optional) (2 bits)

Mapping Information (optional)

FPAN (64 bits for full coverage)
FPAN PSN (4 bits)
FPAN Expiry Date (14 bits for value 0000-9999)

RFU (10 bits) (can be used for transaction reference or any additional requirement)

Note that various of these options relate to use of an encrypted payload, and that the meaning of specific fields is generally indicated by the discussion of UCAF Format 6 and UCAF Format 5 earlier.

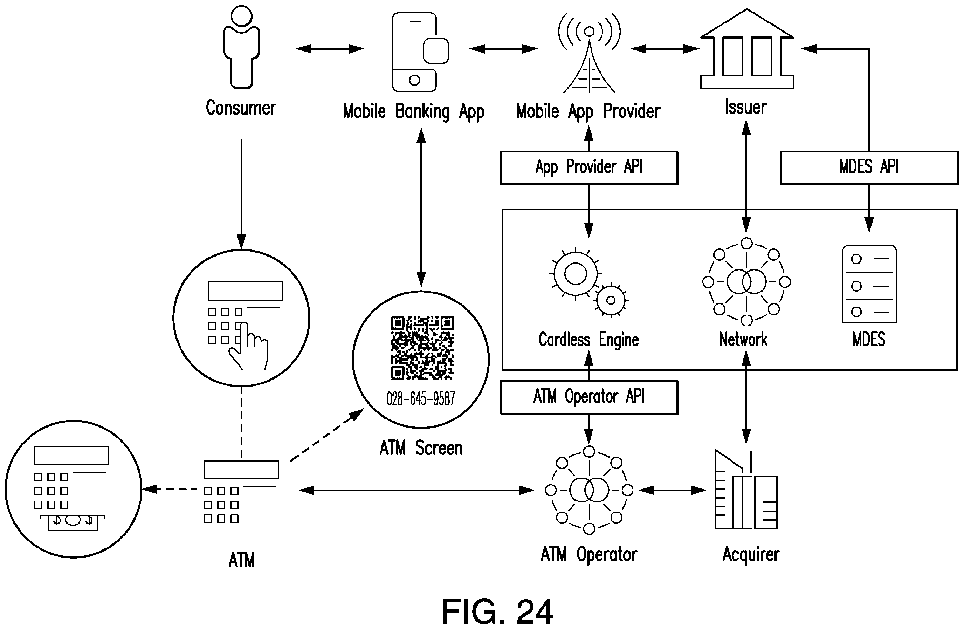

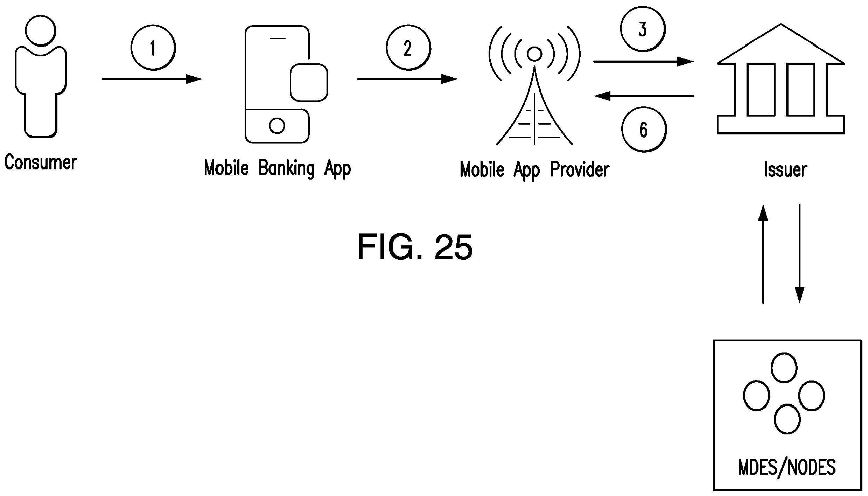

The application of this approach to cardless ATM is shown in Figures 24 and 25. Figure 24 shows the whole cardless ATM "ecosystem": the issuer interacts with the consumer through their mobile banking app, with the mobile app provider as a relevant intermediary. The ATM is under control of an ATM operator acting for an acquirer bank. There are three points of interaction associated with the transaction. One is the "cardless engine" for cardless ATM interaction - this interacts with the app provider and the ATM operator through appropriate APIs for each party. Another is the conventional payment infrastructure network that interacts with the issuer and the acquirer. The third is the digital transaction infrastructure - here identified as MDES - which provides two key functions - tokenisation to allow the "cardless" interaction, which is provided by known tokenisation mechanisms described earlier in connection with MDES, and provision of application cryptogram based credentials, which is here provided through the NODES architecture. This is shown specifically in Figure 25, which indicates the flow after the consumer has scanned the QR code at the ATM - they agree to proceed with the transaction (including any fees) on the mobile banking app, which communicates with the issuer via the mobile app provider. The issuer then requests the cryptogram using a DE55 format, and this request is received by an appropriate node - this may be the nearest node, or a node designated for this purpose in a specific geography, or a node chosen according to some other strategy - and the cryptogram is generated and returned to the issuer and then to the mobile app - the mobile app feeds this information into the cardless engine to configure the transaction for approval through the transaction network in a conventional way.

It should be noted that cardless ATM is only one example of a class of transactions in which the application cryptogram supports a server-based process more as a form of authentication than as a guarantee of transaction details (which are determined according to a separate logic). Here, key elements of the process are handled by the mobile app in connection with the server-based "cardless engine" - the application cryptogram is needed to ensure that the transaction is still adapted to pass through the existing transaction network structures effectively. This model - in which DE55 (or another transaction format) must be used, and used in a way that will be determined to be "valid", while having information in another format embedded to allow use of a system such as NODES to provide credentials for necessary purposes such as application cryptogram provision - can therefore be used at least for other transactions of this type, and potentially for other transaction types too.

As the skilled person will appreciate, the embodiments described above are exemplary, and further embodiments falling within the spirit and scope of the disclosure may be developed by the skilled person working from the principles and examples set out above. In particular, the embodiments described in detail above relate particularly to the generation and validation of credentials, and the encryption and decryption of those credentials with other data, where both the credentials and the other data are used in financial transactions. Generation and validation of credentials, and encryption of credentials with other data, in this way is not limited to financial transactions, and nor is the requirement for messaging to meet specific formats, with different formats being used in different parts of a heterogenous system - this approach may be used in any distributed system where it is necessary for one party to confirm that a legitimate action has been taken by another party and where such constraints apply.

**Claims**

1. A method of providing a cryptographic service at a computing node for a requesting party external to the computing node in relation to a transaction, wherein the cryptographic service operates on transaction data in a cryptographic service format, the method comprising at the computing node:

   receiving a service request from a requesting party, wherein the service request comprises a request to perform a cryptographic service in relation to the transaction, and wherein the request comprises transaction data in a transaction format;
   detecting from the transaction data in the transaction format that it comprises transaction data in a cryptographic service format, and extracting the transaction data in the cryptographic service from one or more data fields of the transaction format, wherein the one or more data fields have been repurposed to contain the transaction data in the cryptographic service format; and
   processing the transaction data in the cryptographic service format to perform the cryptographic service.

2. The method of claim 1, wherein the one or more of the repurposed data fields of the transaction format relate to transaction parameters carried in equivalent data fields in the cryptographic service format.

3. The method of claim 2, wherein the one or more repurposed data fields of the transaction format relating to transaction parameters carried in equivalent data fields in the cryptographic service format relate to one or more of a counter, a random value or an application cryptogram.

4. The method of any preceding claim, wherein a first repurposed data field of the transaction format identifies the transaction data in the transaction format as having one or more data fields repurposed to contain the transaction data in the cryptographic service format.

5. The method of claim 4, wherein the cryptographic data format is one of a plurality of cryptographic data formats, and the first repurposed data field identifies which of the plurality of cryptographic data formats is used.

6. The method of any preceding claim, wherein the transaction format is an EMV data format in which transaction data is carried in the DE55 data element.

7. The method of claim 6, wherein the transaction is a cardless ATM transaction.

8. The method of any preceding claim, wherein a second repurposed data field of the transaction format identifies the computing node.

9. Computing apparatus comprising a processor and a memory and adapted to operate as a computing node to perform the method of any of claims 1 to 8.

10. A method of performing a transaction at computing apparatus of a transacting party, comprising:

creating transaction data for which a cryptographic service is required, wherein the cryptographic service is to be provided by a computing node;

compiling the transaction data in a cryptographic service format;

preparing a message in a transaction data format used for performing the transaction, wherein one or more data fields of the message in the transaction data format are repurposed to contain the transaction data in the cryptographic service format; and

identifying in the transaction data format that the one or more data fields have been repurposed to contain the transaction data in the cryptographic service format.

11. The method of claim 10, wherein the one or more of the repurposed data fields of the transaction format relate to transaction parameters carried in equivalent data fields in the cryptographic service format.

12. The method of claim 11, wherein the one or more repurposed data fields of the transaction format relating to transaction parameters carried in equivalent data fields in the cryptographic service format relate to one or more of a counter, a random value or an application cryptogram.

13. The method of any of claims 10 to 12, wherein a first repurposed data field of the transaction format identifies the transaction data in the transaction format as having one or more data fields repurposed to contain the transaction data in the cryptographic service format.

14. The method of claim 13, wherein the cryptographic data format is one of a plurality of cryptographic data formats, and the first repurposed data field identifies which of the plurality of cryptographic data formats is used.

15. The method of any of claims 10 to 14, wherein the transaction format is an EMV data format in which transaction data is carried in the DE55 data element.

16. The method of claim 15, wherein the transaction is a cardless ATM transaction.

17. The method of any of claims 10 to 16, wherein a second repurposed data field of the transaction format identifies a computing node designated to provide the cryptographic service.

18. Computing apparatus comprising a processor and a memory and adapted to perform the method of any of claims 10 to 17.

FIG. 1

FIG. 2

FIG. 3

FIG. 4

100

150 → SWITCH

Funds and transaction details

Funds and transaction details

130 → ISSUER

140 → ACQUIRER

Settle payment

Funds

110

120

CARDHOLDER

Transaction

Goods/services

MERCHANT

FIG. 5

FIG. 6

FIG. 7

ATM 8　　　　　　　　SMARTPHONE 11　　　　　　ISSUER 4

```
                    ┌─────────────────────┐
                    │  CARDHOLDER INDICATES│
                    │  SUM TO BE WITHDRAWN │ ←──── 800
                    │    ON BANKING APP    │
                    └─────────────────────┘
                              │
                  805 ───→    │        ┌──────────────────────┐
                              └───────→│   ISSUER ESTABLISHES  │
                                       │  BASIS FOR CARDLESS   │
                                       │      WITHDRAWAL       │
                                       └──────────────────────┘
  ┌──────────────────────┐                        │   ↖ 810
  │  CARDHOLDER INDICATES │                        │
  │  CARDLESS ATM AT ATM  │ ←──── 815              │
  └──────────────────────┘                         │
              │                                     │
  ┌──────────────────────┐                         │
  │  QR CODE GENERATED    │ ←──── 820               │
  │  AND DISPLAYED AT ATM │                         │
  └──────────────────────┘                         │
              │          ┌──────────────────────┐   │            835
              │          │  CARDHOLDER CAPTURES  │   │            ↓
              └─────────→│  AND INTEPRETS QR CODE│   │
          825 ──→        │    WITH SMARTPHONE    │   │
                         └──────────────────────┘   │
                               │        ┌──────────────────────┐
                    830 →      └───────→│  DETAILS OF WITHDRAWAL│
                                        │      DETERMINED       │
                                        └──────────────────────┘
                                                   │
                              840 ───→  ┌──────────────────────┐
                                        │    AUTHORISATION OF   │
                                        │  WITHDRAWAL BY ISSUER │
                                        └──────────────────────┘
                                                   │
                ┌──────────────────────┐           │            855
                │  WITHDRAWAL PRESENTED │           │            ↓
      845 ───→  │  TO CARDHOLDER FOR    │ ←─────────┘
                │     AUTHORISATION     │   IF AUTHORISED
                └──────────────────────┘
                          │        ┌──────────────────────┐
              850 →       └───────→│   ISSUER APPROVES     │
                                   │   TRANSACTION AND     │
                          IF AUTHORISED  NOTIFIES ATM      │
                                   └──────────────────────┘
      860                                      │
       ↓                                       │
  ┌──────────────────────┐                     │
  │   ATM DISPENSES CASH  │ ←───────────────────┘
  └──────────────────────┘
```

FIG. 8

Node

Access Control

Generate

Validate

Key Management

Monitor

FIG. 9

FIG. 10

FIG. 11

Crypto function to provide integrity and authentication

Full or partial crypto data...

Identification of the token...

Identification of the transaction...

Identification of key, crypto method...

Any financial data...

Anything else we want to guarantee

Cardholder

Merchant

Transaction related

Full or partial transaction data...

Transaction Credentials

Validate

V

Monitor

M

Key Management

K

Generate

G

FIG. 12

FIG. 13

Key list "A" with 10 entries in *KeyIds*

*Identifier* 0d51839f–a66a–4fb8–8395–e88e45b447cb

(0, 🔑), (1, 🔑), (2, 🔑), (3, 🔑), (4, 🔑)

(5, 🔑), (6, 🔑), (7, 🔑), (8, 🔑), (9, 🔑)

Key list "B" with 10 entries in *KeyIds*

*Identifier* 515f3fea–337d–41ee–8681–b90af4d84071

(0, 🔑), (1, 🔑), (2, 🔑), (3, 🔑), (4, 🔑)

(5, 🔑), (6, 🔑), (7, 🔑), (8, 🔑), (9, 🔑)

🔒 = Seal

FIG. 14

$N_i$ ⇒ G ⇒ KLi ⇒ Token ⇒ LTC

⬇ getId

id

⬇

label

⬇

keyId

Use info from key list KLi...

HSM configuration

FIG. 15

In Out

- HMAC-SHAxxx-yyy (yyy=leftmost truncation)
- xxx=256,512... with yyy=128,256...

HMAC-SHA256-128

Data

xyz — keyId

Full Cryptogram
(HMAC-SHA256)
or
Truncated
Cryptogram
(HMAC-SHA256-128)

X or 16 bytes

**Legacy Use Case** [L]

- Take leftmost 1 byte
- Decimalization to 2 digits
- Verification process is generate HMAC (HSM) followed by a compare of decimalized value in software

[L] CVC2
X/16 bytes → 1 byte → 2 digits

**UCAF Use Case** [U]

- Take leftmost 8 bytes
- May be able to use standard verify function from HSM

[U] Truncated Cryptogram
X/16 bytes → 8 bytes

**DPD Use Case** [D]

- Take leftmost 16 bytes
- Should be able to use standard verify function from HSM

[D] "Full" Truncated Cryptogram
X/16 bytes → 16 bytes

FIG. 16

EP 4 432 199 A1

Key list "A" with 10 entries in *KeyIds*

*Identifier*  0d51839f-a66a-4fb8-8395-e88e45b447cb

(0, 🔑), (1, 🔑), (2, 🔑), (3, 🔑), (4, 🔑)

(5, 🔑), (6, 🔑), (7, 🔑), (8, 🔑), (9, 🔑)

## FIG. 17

FIG. 18

EP 4 432 199 A1

DXD powered by NODES
(UCAF Format 6)

- UCAF Format 6 (21 bytes) — 241 — 2411

| | |
|---|---|
| – Version (4 bits) | Version identification (0110b) |

2413 — 2412

| | |
|---|---|
| – Node Identifier (6 bits) | |
| – Transaction Key List Reference (2 bits) | Node (technical) identification |
| – Encryption Key List Reference (6 bits) | |

2414

2413

| | |
|---|---|
| – Local Transaction Counter (8 bits) | Transaction identification by G |

2414

| | |
|---|---|
| – Merchant ID Hash (Part 1) (13 bits) | Merchant binding |

| Reserved for future use | – RFU (1 bit – in clear data) |
|---|---|

2421

| Data protection | – Encrypted Data (16 bytes) |
|---|---|

2423

| | |
|---|---|
| • Merchant ID Hash (Part 2) (3 bits) | |
| • SCA Flag (1 bit) | SCA binding |
| • Approximate Amount (23 bits) | Amount binding |

| | |
|---|---|
| • PAN (63 bits) | |
| • PSN (4 bits) | Account mapping information |
| • Partial Expiry Date (7 bits) | |

2425

| | |
|---|---|
| • RFU (1 bit – in encrypted data) | |

| Transaction integrity | • Transaction Cryptogram (22 bits) |
|---|---|

2422

| Decrypt Checksum | • Decrypt Checksum (4 bits) |
|---|---|

2426

— 242

FIG. 19

FIG. 20

EP 4 432 199 A1

Cardless ATM (or other DE55 flow)

MDES: DSRP v0/v0+/v3/v3+

NODES: DSRP v5

| C | Cardholder | ⇨ | M | Merchant | ⇨ | A | Acquirer | ⇨ | | Mastercard | ⇨ | I | Issuer |

M4M  SRC

MDES

AS A

Ask v0+/v3+ get v5
or directly ask v5
using DPAN or TUR

v
v0+

v  v
v0+ v3+

v0+ v  v  v3+

v

v0+/v3+ → go to CSP
V5 → go to NODES...
using DPAN or TUR

DPAN → CSP

DPAN  or  TUR

Integrate (API/EF)

Integrate (API/EF)

DPAN  or  TUR

v  v

Key
Management

v

5  5
Generate

K

5
Validate

G  mG

mV  V

M  Monitoring

NODES

FIG. 21

EP 4 432 199 A1

**EP 4 432 199 A1**

| | | | | | |
|---|---|---|---|---|---|

## ICC System–Related Data – DE55 – From Authorization Request 0100/0200

mastercard

| Enter DE55 | Help |
|---|---|
| Populate Tabs | Help |

820200009505800000000009A032203049C01005F2A0208409F0206000000010000 9F030600000000000009F1101C01F0A00000000000000000000123456789ABCDEF012 3456789ABCDEF00009F1A0200009F26080123456789ABCDEF9F2701809F330300000009 F34033F00009F3501249F360201239F3704012345678407A0000000041 010

| Warnings | M/O | Tag | Tag Description (Click for Details...) | Length (HEX) | Value |
|---|---|---|---|---|---|
| | M | 82 | Application Interchange Profile | 02 | 0000 |
| | M | 95 | Terminal Verification Results | 05 | 8000000000 |
| | M | 9A | Transaction Date | 03 | 220304 |
| | M | 9C | Transaction Type | 01 | 00 >>> Purchase |
| | M | 5F2A | Transaction Currency Code | 02 | 0840 >>> US Dollar |
| | M | 9F02 | Amount, Authorised (Numeric) | 06 | 000000010000 |
| | O | 9F03 | Amount, Other (Numeric) | 06 | 000000000000 |
| | M | 9F10 | Issuer Application Data | 1C | 01F0A0000000000000000000123456789ABCDEF0123456789ABCDEF0000 >>> M/Chip 4 |
| | M | 9F1A | Terminal Country Code | 02 | 0000 >>> Unknown |
| | M | 9F26 | Application Cryptogram | 08 | 0123456789ABCDEF |
| | M | 9F27 | Cryptogram Information Data | 01 | 80 >>> ARQC (as per bits 8-7) |

## FIG. 22

| | | | | | |
|---|---|---|---|---|---|
| | O | 9F33 | Terminal Capabilities | 03 | 000000 |
| | M | 9F34 | Cardholder Verification Method (CVM) Results | 03 | 3F0000 >>> No CVM performed (as per Byte 1) |
| | O | 9F35 | Terminal Type | 01 | 24 >>> Controlled by Merchant \| Unattended – Online only |
| | M | 9F36 | Application Transaction Counter (ATC) | 02 | 0123 |
| | M | 9F37 | Unpredictable Number | 04 | 01234567 |
| | M | 84 | Dedicated File (DE) Name | 07 | A0000000041010 |

| | |
|---|---|
| DE55 Length (Number of Bytes – Max 255) | 130 |

Missing Mandatory Tags: None

FIG. 22 Continued

**Set by NODES** ⟹

- [NODES]
  - Information that can be used to identify a NODES transaction using DE55
- [CARRIER]
  - Information to be used by NODES to carry transaction credentials information
- [STATIC]
  - Compliance with DE55 spec / edits /rules using compliant static value

**Transaction** ⟹

- [DYNAMIC]
  - Information related to the context of transaction
  - *CDCVM Information, Dedicated file name (AID)*

- [TX]
  - Information related to the payment transaction
  - *Transaction date, Transaction type, Transaction currency code, Transaction amount*
    *(authorized & other)*
- [ISSUER]
  - Information specific to the issuer for that transaction
  - *Issuer Dynamic Discretionary Data*

## FIG. 23

FIG. 24

Consumer — 1 → Mobile Banking App — 2 → Mobile App Provider — 3 → Issuer ← 6 —

Issuer ↔ MDES/NODES

## FIG. 25

EP 4 432 199 A1

Europäisches
Patentamt

European
Patent Office

Office européen
des brevets

# EUROPEAN SEARCH REPORT

Application Number

EP 23 30 5333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 748 525 A1 (MASTERCARD INTERNATIONAL INC [US]) 9 December 2020 (2020-12-09) * paragraph [0053] - paragraph [0092]; figures 9-13,16-23 * | 1-18 | INV. G06Q20/38 G06Q20/40 |
| A | US 2021/042743 A1 (GREEN SCOTT [US] ET AL) 11 February 2021 (2021-02-11) * paragraph [0051] - paragraph [0108]; figures 1-8 * | 6,7,15,16 | |

TECHNICAL FIELDS SEARCHED (IPC)

G06Q

The present search report has been drawn up for all claims

| Place of search | Date of completion of the search | Examiner |
|---|---|---|
| The Hague | 4 July 2023 | Raymaekers, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

## ANNEX TO THE EUROPEAN SEARCH REPORT
## ON EUROPEAN PATENT APPLICATION NO.

EP 23 30 5333

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2023

| Patent document cited in search report | | Publication date | Patent family member(s) | | Publication date |
|---|---|---|---|---|---|
| EP 3748525 | A1 | 09-12-2020 | EP | 3748525 A1 | 09-12-2020 |
| | | | EP | 4184365 A1 | 24-05-2023 |
| US 2021042743 | A1 | 11-02-2021 | US | 2021042743 A1 | 11-02-2021 |
| | | | US | 2023117833 A1 | 20-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 19178579

- WO 2022250716 A1